# EUROPÄISCHE PATENTANMELDUNG

(11) **EP 4 403 298 A2**
(43) Veröffentlichungstag der Anmeldung: **24.07.2024**
(21) Anmeldenummer: 23219265.8
(22) Anmeldetag: 21.12.2023
(51) Int. Cl.: B23Q 1/66, B23Q 39/04, B23Q 39/00

(54) **WERKZEUGMASCHINE, SOWIE EIN VERFAHREN ZUM BETREIBEN DER WERKZEUGMASCHINE**

(71) Anmelder: Fill Gesellschaft m.b.H., 4942 Gurten (AT)
(72) Erfinder: Die Erfindernennung liegt noch nicht vor
(74) Vertreter: Burger, Hannes

(57) **Zusammenfassung**

Die Erfindung betrifft eine Werkzeugmaschine (1) umfassend:
ein Maschinengestell (2) in welchem ein Beladeraum (45) und ein Bearbeitungsraum (44) ausgebildet ist;
eine erste Arbeitsspindel (5), welche um eine erste Spindelachse (7) drehbar gelagert ist, wobei die erste Arbeitsspindel (5) entlang einer horizontalen Z-Achse (9), entlang einer horizontalen X-Achse (10) und entlang einer vertikalen Y-Achse (11) verschiebbar am Maschinengestell (2) aufgenommen ist;
eine Werkstückspannvorrichtung (18), welche zum Aufnehmen zumindest eines ersten Werkstückes (25) und eines zweiten Werkstückes (31) ausgebildet ist. Weiters ist eine zweite Arbeitsspindel (6) ausgebildet, welche um eine zweite Spindelachse (8) drehbar gelagert ist, wobei die erste Arbeitsspindel (5) und die zweite Arbeitsspindel (6) vertikal übereinander angeordnet sind und die erste Arbeitsspindel (5) zum Bearbeiten des ersten Werkstückes (25) und die zweite Arbeitsspindel (6) zum Bearbeiten des zweiten Werkstückes (31) ausgebildet ist.

## Beschreibung

Die Erfindung betrifft eine Werkzeugmaschine, sowie ein Verfahren zum Betreiben der Werkzeugmaschine.

Die EP3659744A1 offenbart eine Werkzeugmaschine zur spanenden Bearbeitung von Werkstücken mit einem in einem Maschinengestell um eine horizontale Drehachse drehbar gelagerten Werkstücktisch, der auf seinen beiden einander gegenüberliegenden Tischseiten jeweils einen Werkstückträger zur Aufnahme von mindestens einem Werkstück aufweist, wobei der eine Werkstückträger auf einer Bearbeitungsseite und der andere Werkstückträger auf einer Beladeseite vorgesehen sind und wobei der bearbeitungsseitige Werkstückträger und der beladeseitige Werkstückträger durch Verschwenken des Werkstücktisches vertauschbar sind. Weiters ist vorgesehen, dass die beiden Werkstückträger jeweils eine vorstehende Auflagekante zum Aufstellen von insbesondere plattenförmigen Werkstücken aufweisen und dass der Werkstücktisch in seiner Bearbeitungs- und Beladeposition gegenüber der Senkrechten geneigt ist, so dass sich das auf der Beladeseite an der Auflagekante aufgestellte Werkstück gegen die beladeseitige Tischseite anlehnen kann.

Die in der EP3659744A1 offenbarte Werkzeugmaschine weist den Nachteil auf, dass diese eine geringe Flexibilität und auch eine geringe Effizienz hat.

Aufgabe der vorliegenden Erfindung war es, die Nachteile des Standes der Technik zu überwinden und eine verbesserte Werkzeugmaschine, sowie ein verbessertes Verfahren zum Betreiben der Werkzeugmaschine zur Verfügung zu stellen.

Diese Aufgabe wird durch eine Vorrichtung und ein Verfahren gemäß den Ansprüchen gelöst.

Die Erfindung betrifft eine Werkzeugmaschine umfassend:
ein Maschinengestell in welchem ein Beladeraum und ein Bearbeitungsraum ausgebildet ist;
eine erste Arbeitsspindel, welche um eine erste Spindelachse drehbar gelagert ist, wobei die erste Arbeitsspindel entlang einer horizontalen Z-Achse, entlang einer horizontalen X-Achse und entlang einer vertikalen Y-Achse verschiebbar am Maschinengestell aufgenommen ist;
eine Werkstückspannvorrichtung, welche zum Aufnehmen zumindest eines ersten Werkstückes und eines zweiten Werkstückes ausgebildet ist.

Weiters ist eine zweite Arbeitsspindel ausgebildet, welche um eine zweite Spindelachse drehbar gelagert ist, wobei die zweite Arbeitsspindel entlang der Z-Achse, entlang der X-Achse und entlang der Y-Achse verschiebbar am Maschinengestell aufgenommen ist, wobei die erste Arbeitsspindel und die zweite Arbeitsspindel vertikal übereinander angeordnet sind und die erste Arbeitsspindel zum Bearbeiten des ersten Werkstückes und die zweite Arbeitsspindel zum Bearbeiten des zweiten Werkstückes ausgebildet ist.

Die X-Achse und die Z-Achse können in einer horizontalen Ebene angeordnet sein und orthogonal zueinander ausgerichtet sein. Die Y-Achse kann orthogonal zur X-Achse und zur Z-Achse ausgerichtet sein und vertikal angeordnet sein. Insbesondere kann die Z-Achse parallel zu den Spindelachsen ausgerichtet sein bzw. parallel zu den unverschwenkten Spindelachsen ausgerichtet sein, sofern die Arbeitsspindeln um die Y-Achse schwenkbar ausgebildet sind.

Die erfindungsgemäße Werkzeugmaschine bringt den Vorteil mit sich, dass Werkstücke mit hoher Effizienz einfach bearbeitet werden können. Weiters weist die erfindungsgemäße Werkzeugmaschine eine hohe Flexibilität zur Bearbeitung komplexer Werkstücke auf.

Weiters kann es zweckmäßig sein, wenn die erste Arbeitsspindel und die zweite Arbeitsspindel an einer gemeinsamen Spindelverstellvorrichtung angeordnet sind und gemeinsam in der Z-Achse verschiebbar sind. Dies bringt den Vorteil mit sich, dass die erste Arbeitsspindel und die zweite Arbeitsspindel mittels eines gemeinsamen Antriebes verschoben werden können. Dadurch kann der Aufbau der Werkzeugmaschine vereinfacht werden.

Alternativ kann vorgesehen sein, dass die erste Arbeitsspindel mittels einer ersten Spindelverstellvorrichtung in der Z-Achse verschiebbar ist und dass die zweite Arbeitsspindel mittels einer zweiten Spindelverstellvorrichtung in der Z-Achse verschiebbar ist, wobei die erste Arbeitsspindel und die zweite Arbeitsspindel jeweils einen eigenen Verstellantrieb aufweisen und unabhängig voneinander in der Z-Achse verschiebbar sind. Dies bringt den Vorteil mit sich, dass die erste Arbeitsspindel und die zweite Arbeitsspindel voneinander unabhängige Bearbeitungen durchführen können. Insbesondere können somit zwei unterschiedlich ausgebildete Werkstücke gleichzeitig in der Werkzeugmaschine bearbeitet werden. Weiters können durch diese Maßnahme Toleranzen in den unterschiedlichen Werkstücken bzw. in den Werkstücktischen ausgeglichen werden.

Weiters kann es zweckmäßig sein, wenn die erste Arbeitsspindel und die zweite Arbeitsspindel an einer gemeinsamen Y-Verstellvorrichtung angeordnet sind und gemeinsam in der Y-Achse verschiebbar sind. Dies bringt den Vorteil mit sich, dass die erste Arbeitsspindel und die zweite Arbeitsspindel mittels eines gemeinsamen Antriebes verschoben werden können. Dadurch kann der Aufbau der Werkzeugmaschine vereinfacht werden.

Alternativ kann vorgesehen sein, dass die erste Arbeitsspindel mittels einer ersten Y-Verstellvorrichtung in der Y-Achse verschiebbar ist und dass die zweite Arbeitsspindel mittels einer zweiten Y-Verstellvorrichtung in der Y-Achse verschiebbar ist, wobei die erste Arbeitsspindel und die zweite Arbeitsspindel jeweils einen eigenen Verstellantrieb aufweisen und unabhängig voneinander in der Y-Achse verschiebbar sind. Dies bringt den Vorteil mit sich, dass die erste Arbeitsspindel und die zweite Arbeitsspindel voneinander unabhängige Bearbeitungen durchführen können. Insbesondere können somit zwei unterschiedlich ausgebildete Werkstücke gleichzeitig in der Werkzeugmaschine bearbeitet werden. Weiters können durch diese Maßnahme Toleranzen in den unterschiedlichen Werkstücken bzw. in den Werkstücktischen ausgeglichen werden.

Weiters kann es zweckmäßig sein, wenn die erste Arbeitsspindel und die zweite Arbeitsspindel an einer gemeinsamen X-Verstellvorrichtung angeordnet sind und gemeinsam in der X-Achse verschiebbar sind. Dies bringt den Vorteil mit sich, dass die erste Arbeitsspindel und die zweite Arbeitsspindel mittels eines gemeinsamen Antriebes verschoben werden können. Dadurch kann der Aufbau der Werkzeugmaschine vereinfacht werden.

Alternativ kann vorgesehen sein, dass die erste Arbeitsspindel mittels einer ersten X-Verstellvorrichtung in der X-Achse verschiebbar ist und dass die zweite Arbeitsspindel mittels einer zweiten X-Verstellvorrichtung in der X-Achse verschiebbar ist, wobei die erste Arbeitsspindel und die zweite Arbeitsspindel jeweils einen eigenen Verstellantrieb aufweisen und unabhängig voneinander in der X-Achse verschiebbar sind. Dies bringt den Vorteil mit sich, dass die erste Arbeitsspindel und die zweite Arbeitsspindel voneinander unabhängige Bearbeitungen durchführen können. Insbesondere können somit zwei unterschiedlich ausgebildete Werkstücke gleichzeitig in der Werkzeugmaschine bearbeitet werden.

Die Verstellbarkeit der Arbeitsspindeln in den einzelnen Achsen lässt sich hierbei beliebig kombinieren.

Darüber hinaus kann vorgesehen sein, dass zusätzlich zur ersten Arbeitsspindel und zur zweiten Arbeitsspindel eine dritte Arbeitsspindel oder auch weitere Arbeitsspindeln ausgebildet ist, wobei die erste Arbeitsspindel, die zweite Arbeitsspindel und die dritte Arbeitsspindel vertikal übereinander angeordnet sind. Dies bringt den Vorteil mit sich, dass die Effizienz der Werkzeugmaschine weiter erhöht werden kann.

Weiters kann es zweckmäßig sein, wenn ein Schwenktisch ausgebildet ist, wobei der Schwenktisch
eine erste vordere Werkstückaufnahme zur direkten und unbeweglichen Aufnahme des ersten Werkstückes am Schwenktisch und eine zweite vordere Werkstückaufnahme zur direkten und unbeweglichen Aufnahme des zweiten Werkstückes am Schwenktisch aufweist und eine erste hintere Werkstückaufnahme zur direkten und unbeweglichen Aufnahme eines ersten hinteren Werkstückes am Schwenktisch und eine zweite hintere Werkstückaufnahme zur direkten und unbeweglichen Aufnahme eines zweiten hinteren Werkstückes am Schwenktisch aufweist,
wobei der Schwenktisch um eine Schwenktischachse, welche parallel zu einer horizontalen X-Achse ausgerichtet ist, schwenkbar gelagert ist, wobei je nach Schwenkstellung des Schwenktisches die erste vordere Werkstückaufnahme und die zweite vordere Werkstückaufnahme in den Bearbeitungsraum einschwenkbar sind oder die erste hintere Werkstückaufnahme und die zweite hintere Werkstückaufnahme in den Bearbeitungsraum einschwenkbar sind. Dies bringt den Vorteil mit sich, dass durch diese Maßnahme die Effizienz der Werkzeugmaschine gesteigert werden kann. Gleichzeitig kann der Aufbau der Werkzeugmaschine möglichst einfach gehalten werden. Insbesondere kann vorgesehen sein, dass der Schwenktisch ausschließlich um die Schwenktischachse schwenkbar ist und ansonsten relativ zum Maschinengestell nicht verschiebbar ist.

Mit anderen Worten ausgedrückt, kann der Schwenktisch eine Schwenktischvorderseite aufweisen, an welcher die erste vordere Werkstückaufnahme und die zweite vordere Werkstückaufnahme angeordnet sind und eine Schwenktischrückseite aufweisen, an welcher die erste hintere Werkstückaufnahme und die zweite hintere Werkstückaufnahme angeordnet sind.

Mit anderen Worten ausgedrückt kann je nach Schwenkstellung des Schwenktisches die erste Arbeitsspindel der ersten vorderen Werkstückaufnahme zugeordnet sein und die zweite Arbeitsspindel der zweiten vorderen Werkstückaufnahme zugeordnet sein oder die erste Arbeitsspindel der ersten hinteren Werkstückaufnahme zugeordnet sein und die zweite Arbeitsspindel der zweiten hinteren Werkstückaufnahme zugeordnet sein. Dies bringt den Vorteil mit sich, dass durch diese Maßnahme die Effizienz der Werkzeugmaschine gesteigert werden kann.

Natürlich ist es hierbei auch denkbar, dass in weiteren Schwenkstellungen eine weitere Zuordnung der Werkstückaufnahmen zum Bearbeitungsraum bzw. zu den Arbeitsspindeln möglich ist.

Ferner kann vorgesehen sein, dass die erste vordere Werkstückaufnahme in einem ersten vorderen Werkstückaufnahmeabstand zur Schwenktischachse angeordnet ist und dass die zweite hintere Werkstückaufnahme in einem zweiten hinteren Werkstückaufnahmeabstand zur Schwenktischachse angeordnet ist, wobei der erste vordere Werkstückaufnahmeabstand und der zweite hintere Werkstückaufnahmeabstand unterschiedlich groß sind und wobei der Schwenktisch Ausnehmungen aufweist, durch welche ein Bearbeitungswerkzeug hindurchführbar ist. Dies bringt den Vorteil mit sich, dass durch diese Maßnahme auch eine dem Schwenktisch zugeordnete Seite der Werkstücke bearbeitet werden kann.

Alternativ dazu kann vorgesehen sein, dass die Werkstücke in einer ersten Aufspannung an deren Vorderseite bearbeitet werden und in einer zweiten Aufspannung an deren Rückseite bearbeitet werden. Das Umspannen kann hierbei hauptzeitparallel erfolgen.

Der Schwenktisch kann mittels eines Schwenktischantriebsmotors um die Schwenktischachse verschwenkt werden.

In einer alternativen Ausführung kann vorgesehen sein, dass die Werkstückspannvorrichtung einen ersten Werkstücktisch und einen zweiten Werkstücktisch umfasst, wobei der erste Werkstücktisch um eine erste Schwenkachse, welche parallel zur X-Achse ausgerichtet ist, schwenkbar gelagert ist und der zweite Werkstücktisch um eine zweite Schwenkachse, welche parallel zur X-Achse ausgerichtet ist, schwenkbar gelagert ist und die erste Arbeitsspindel dem ersten Werkstücktisch zugeordnet ist und die zweite Arbeitsspindel dem zweiten Werkstücktisch zugeordnet ist, wobei der erste Werkstücktisch eine erste vordere Werkstückaufnahme und eine erste hintere Werkstückaufnahme aufweist und der zweite Werkstücktisch eine zweite vordere Werkstückaufnahme und eine zweite hintere Werkstückaufnahme aufweist, wobei je nach Schwenkstellung des ersten Werkstücktisches und des zweiten Werkstücktisches, die erste vordere Werkstückaufnahme und die zweite vordere Werkstückaufnahme in den Bearbeitungsraum einschwenkbar sind oder die erste hintere Werkstückaufnahme und die zweite hintere Werkstückaufnahme in den Bearbeitungsraum einschwenkbar sind. Dies bringt den Vorteil mit sich, dass durch diese Maßnahme die Effizienz der Werkzeugmaschine gesteigert werden kann. Gleichzeitig kann durch diese Maßnahme die Flexibilität der Werkzeugmaschine gesteigert werden.

Insbesondere kann vorgesehen sein, dass der erste Werkstücktisch ausschließlich um die erste Schwenkachse schwenkbar ist und ansonsten relativ zum Maschinengestell nicht verschiebbar ist.

Insbesondere kann vorgesehen sein, dass der zweite Werkstücktisch ausschließlich um die zweite Schwenkachse schwenkbar ist und ansonsten relativ zum Maschinengestell nicht verschiebbar ist.

Mit anderen Worten ausgedrückt, kann der erste Werkstücktisch eine erste Werkstücktischvorderseite aufweisen, an welcher die erste vordere Werkstückaufnahme angeordnet ist. Weiters kann der zweite Werkstücktisch eine zweite Werkstücktischvorderseite aufweisen, an welcher die zweite vordere Werkstückaufnahme angeordnet ist. Weiters kann der erste Werkstücktisch eine erste Werkstücktischrückseite aufweisen, an welcher die erste hintere Werkstückaufnahme angeordnet ist. Weiters kann der zweite Werkstücktisch eine zweite Werkstücktischrückseite aufweisen, an welcher die zweite hintere Werkstückaufnahme angeordnet ist.

In einer ersten Ausführungsvariante kann vorgesehen sein, dass der erste Werkstücktisch und der zweite Werkstücktisch eine gemeinsame Antriebseinheit zum Drehen des ersten Werkstücktisches um die erste Schwenkachse und zum Drehen des zweiten Werkstücktisches um die zweite Schwenkachse aufweisen. Der erste Werkstücktisch und der zweite Werkstücktisch können hierbei mittels eines Getriebes miteinander gekoppelt sein. Dies bringt den Vorteil mit sich, dass durch diese Maßnahme die Effizienz der Werkzeugmaschine gesteigert werden kann.

In einer zweiten Ausführungsvariante kann vorgesehen sein, dass der erste Werkstücktisch eine erste Antriebseinheit zum Drehen des ersten Werkstücktisches um die erste Schwenkachse aufweist und der zweite Werkstücktisch eine zweite Antriebseinheit und zum Drehen des zweiten Werkstücktisches um die zweite Schwenkachse aufweist. Der erste Werkstücktisch und der zweite Werkstücktisch können hierbei unabhängig voneinander verschwenkt werden. Dies bringt den Vorteil mit sich, dass durch diese Maßnahme die Effizienz der Werkzeugmaschine gesteigert werden kann. Gleichzeitig kann durch diese Maßnahme die Flexibilität der Werkzeugmaschine gesteigert werden.

Mit anderen Worten ausgedrückt kann je nach Schwenkstellung des ersten Werkstücktisches die erste Arbeitsspindel der ersten vorderen Werkstückaufnahme zugeordnet sein oder die erste Arbeitsspindel der ersten hinteren Werkstückaufnahme zugeordnet sein und je nach Schwenkstellung des zweiten Werkstücktisches die zweite Arbeitsspindel der zweiten vorderen Werkstückaufnahme oder der zweiten hinteren Werkstückaufnahme zugeordnet sein. Dies bringt den Vorteil mit sich, dass durch diese Maßnahme die Effizienz der Werkzeugmaschine gesteigert werden kann. Darüber hinaus kann durch diese Maßnahme der Platzbedarf bzw. der Bauraum der Werkzeugmaschine möglichst geringgehalten werden.

Natürlich ist es hierbei auch denkbar, dass in weiteren Schwenkstellungen eine weitere Zuordnung der Werkstückaufnahmen zum Bearbeitungsraum bzw. zu den Arbeitsspindeln möglich ist.

Vorteilhaft ist auch eine Ausprägung, gemäß welcher vorgesehen sein kann, dass die erste vordere Werkstückaufnahme in einem ersten vorderen Werkstückaufnahmeabstand zur ersten Schwenkachse angeordnet ist und dass die erste hintere Werkstückaufnahme in einem ersten hinteren Werkstückaufnahmeabstand zur ersten Schwenkachse angeordnet ist, wobei sich der erste vordere Werkstückaufnahmeabstand und der erste hintere Werkstückaufnahmeabstand bezüglich der ersten Schwenkachse in unterschiedliche Seiten des ersten Werkstücktisches erstrecken und wobei der Schwenktisch Ausnehmungen aufweist, durch welche ein Bearbeitungswerkzeug hindurchführbar ist. Dies bringt den Vorteil mit sich, dass durch diese Maßnahme auch eine dem Werkstücktisch zugeordnete Seite der Werkstücke bearbeitet werden kann.

Gemäß einer Weiterbildung ist es möglich, dass der erste Werkstücktisch einen ersten Radius aufweist, welcher an einen ersten Flugkreis des ersten Werkstücktisches angepasst ist und der zweite Werkstücktisch einen zweiten Radius aufweist, welcher an einen zweiten Flugkreis des zweiten Werkstücktisches angepasst ist, wobei der erste Flugkreis des ersten Werkstücktisches und der zweite Flugkreis des zweiten Werkstücktisches in einem Flugkreisabstand zwischen 0,1mm und 10mm, insbesondere zwischen 0,2mm und 5mm, bevorzugt zwischen 0,5mm und 2mm zueinander angeordnet sind. Dies bringt den Vorteil mit sich, dass zwischen dem ersten Werkstücktisch und dem zweiten Werkstücktisch ein möglichst geringer Spalt geschaffen werden kann, sodass eine möglichst gute Abtrennung zwischen dem Beladeraum und dem Bearbeitungsraum geschaffen werden kann.

Weiteres kann vorgesehen sein, dass der erste Werkstücktisch, insbesondere am ersten Radius, ein erstes Dichtelement aufweist und der zweite Werkstücktisch, insbesondere am zweiten Radius, ein zweites Dichtelement aufweist. Dies bringt den Vorteil mit sich, dass durch diese Maßnahme die Abdichtung zwischen dem ersten Werkstücktisch und dem zweiten Werkstücktisch verbessert werden kann.

Insbesondere kann vorgesehen sein, dass sich der erste Radius über einen gewissen Bereich des ersten Werkstücktisches erstreckt bzw. der erste Werkstücktisch eine gewisse Dicke aufweist, sodass die Dichtfunktion auch bei einer geringen Verschwenkung des ersten Werkstücktisches aufrechterhalten werden kann.

Weiters kann vorgesehen sein, dass sich der zweite Radius über einen gewissen Bereich des zweiten Werkstücktisches erstreckt bzw. der zweite Werkstücktisch eine gewisse Dicke aufweist, sodass die Dichtfunktion auch bei einer geringen Verschwenkung des zweiten Werkstücktisches aufrechterhalten werden kann.

Weiters kann vorgesehen sein, dass am ersten Radius und/oder am zweiten Radius ein Gummiprofil angeordnet ist. Durch diese Maßnahme kann die Dichtwirkung weiter erhöht werden.

Weiters kann vorgesehen sein, dass am ersten Radius und/oder am zweiten Radius ein Dichtelement, wie ein Gummiprofil oder eine Bürste angeordnet ist, welches in Radialrichtung verschiebbar ist, um die Spalte einstellen und/oder aktiv schließen zu können.

In einer alternativen Ausführung kann vorgesehen sein, dass der erste Werkstücktisch einen ersten Flugkreis des ersten Werkstücktisches aufweist und der zweite Werkstücktisch einen zweiten Flugkreis des zweiten Werkstücktisches aufweist, wobei der erste Flugkreis des ersten Werkstücktisches und der zweite Flugkreis des zweiten Werkstücktisches in einem Flugkreisabstand zueinander angeordnet sind, wobei zwischen dem ersten Werkstücktisch und dem zweiten Werkstücktisch ein Trennwandsegment angeordnet ist, wobei das Trennwandsegment eine an den ersten Flugkreis und den zweiten Flugkreis angepasste Formgebung aufweist. Dies bringt den Vorteil mit sich, dass durch diese Maßnahme eine möglichst gute Abtrennung zwischen dem Beladeraum und dem Bearbeitungsraum geschaffen werden kann. Weiters kann durch diese Maßnahme der Abstand der beiden Werkstücktische zueinander variiert werden, ohne dabei die Baugröße der beiden Werkstücktische verändern zu müssen.

Insbesondere kann vorgesehen sein, dass die Abtrennung eine zum ersten Radius bzw. zum zweiten Radius negative Formgebung aufweist und eine gewisse Dicke aufweist, sodass die Dichtfunktion auch bei einer geringen Verschwenkung des ersten Werkstücktisches bzw. des zweiten Werkstücktisches aufrechterhalten werden kann.

Darüber hinaus kann vorgesehen sein, dass seitlich zur Werkstückspannvorrichtung beziehungsweise an einem Längsende der Werkstückspannvorrichtung ein erstes Werkzeugmagazin angeordnet ist, welcher zur Aufnahme von mehreren Bearbeitungswerkzeugen ausgebildet ist, wobei die erste Arbeitsspindel zum ersten Werkzeugmagazin verschiebbar ist, sodass die Bearbeitungswerkzeuge direkt vom ersten Werkzeugmagazin in die erste Arbeitsspindel aufnehmbar sind und dass
seitlich zur Werkstückspannvorrichtung ein zweites Werkzeugmagazin angeordnet ist, welcher zur Aufnahme von mehreren Bearbeitungswerkzeugen ausgebildet ist, wobei die zweite Arbeitsspindel zum zweiten Werkzeugmagazin verschiebbar ist, sodass die Bearbeitungswerkzeuge direkt vom zweiten Werkzeugmagazin in die zweite Arbeitsspindel aufnehmbar sind.

Darüber hinaus kann vorgesehen sein, dass seitlich zur Werkstückspannvorrichtung beziehungsweise an einem Längsende der Werkstückspannvorrichtung ein erster Werkzeugrevolver angeordnet ist, welcher zur Aufnahme von mehreren Bearbeitungswerkzeugen ausgebildet ist, wobei die erste Arbeitsspindel zum ersten Werkzeugrevolver verschiebbar ist, sodass die Bearbeitungswerkzeuge direkt vom ersten Werkzeugrevolver in die erste Arbeitsspindel aufnehmbar sind und dass
seitlich zur Werkstückspannvorrichtung ein zweiter Werkzeugrevolver angeordnet ist, welcher zur Aufnahme von mehreren Bearbeitungswerkzeugen ausgebildet ist, wobei die zweite Arbeitsspindel zum zweiten Werkzeugrevolver verschiebbar ist, sodass die Bearbeitungswerkzeuge direkt vom zweiten Werkzeugrevolver in die zweite Arbeitsspindel aufnehmbar sind. Dies bringt den Vorteil mit sich, dass durch diese Maßnahme ein möglichst einfacher Werkzeugwechsel erreicht werden kann. Insbesondere kann vorgesehen sein, dass die Werkzeugrevolver die Bearbeitungswerkzeuge jeweils in eine Wechselposition drehen können, in welcher die Bearbeitungswerkzeuge von der jeweiligen Arbeitsspindel entnommen werden können bzw. gerade benutzte Bearbeitungswerkzeuge in den Werkzeugrevolver eingesetzt werden können. Insbesondere ist es denkbar, dass die Arbeitsspindeln mehrere Positionen des jeweiligen Werkzeugrevolvers anfahren können, sodass ein Ablegen des geraden benutzten Bearbeitungswerkzeuges und ein Entnehmen des neuen Bearbeitungswerkzeuges ohne einer Drehung des Werkzeugrevolvers erfolgen kann. Insbesondere kann hierbei vorgesehen sein, dass der erste Werkzeugrevolver so positioniert ist, dass zwei Werkzeugaufnahmeplätze des ersten Werkzeugrevolvers vertikal übereinander angeordnet sind, sodass ein Ablegen des alten Werkzeuges der ersten Arbeitsspindel und eine Aufnahme eines neuen Werkzeuges der ersten Arbeitsspindel ohne dem Verdrehen des ersten Werkzeugrevolvers und ohne Verschiebung der ersten Arbeitsspindel in X-Achse erfolgen kann. Weiters kann vorgesehen sein, dass der zweite Werkzeugrevolver so positioniert ist, dass zwei Werkzeugaufnahmeplätze des zweiten Werkzeugrevolvers vertikal übereinander angeordnet sind, sodass ein Ablegen des alten Werkzeuges der zweiten Arbeitsspindel und eine Aufnahme eines neuen Werkzeuges ohne dem Verdrehen des zweiten Werkzeugrevolvers und ohne Verschiebung der zweiten Arbeitsspindel in X-Achse erfolgen kann.

Natürlich ist es auch denkbar, dass zwischen dem Ablegen des geraden benutzten Bearbeitungswerkzeuges und dem Entnehmen des neuen Bearbeitungswerkzeuges sowohl die jeweilige Bearbeitungsspindel bewegt wird, als auch der jeweilige Werkzeugrevolver verdreht wird. Die einzelnen Werkzeugaufnahmepositionen können in einem kreisförmigen Muster am Werkzeugrevolver verteilt angeordnet sein.

Weiters kann vorgesehen sein, dass an einer zweiten Seite der Werkstückspannvorrichtung beziehungsweise an einem zweiten Längsende der Werkstückspannvorrichtung ebenfalls zwei Werkzeugrevolver angeordnet sind, welche einen ähnlichen Aufbau, wie die bereits beschriebenen erster Werkzeugrevolver und zweiter Werkzeugrevolver aufweisen.

In einer Alternative kann vorgesehen sein, dass an einem Längsende der Werkstückspannvorrichtung ein Werkzeugmagazin angeordnet ist, wobei das Werkzeugmagazin ein Kettenumlaufmagazin umfasst, wobei ein gerades Trum des Kettenumlaufmagazines vertikal ausgerichtet ist, wobei die erste Arbeitsspindel und die zweite Arbeitsspindel zum geraden Trum des Kettenumlaufmagazines verschiebbar sind, wobei ein Abstand zwischen der ersten Arbeitsspindel und der zweiten Arbeitsspindel einer Teilung oder einem Vielfachen der Teilung des Kettenumlaufmagazines entspricht. Hierbei ist von Vorteil, dass die erste Arbeitsspindel und die zweite Arbeitsspindel zum Kettenumlaufmagazin bewegt werden können, um das nicht mehr benötigte Arbeitswerkzeug ablegen und ein neues Bearbeitungswerkzeug aufnehmen zu können. Dadurch dass der Abstand zwischen der ersten Arbeitsspindel und der zweiten Arbeitsspindel einer Teilung oder einer Vielfachen einer Teilung des Kettenumlaufmagazins entspricht, können die in der ersten Arbeitsspindel und zweiten Arbeitsspindel aufgenommenen Bearbeitungswerkzeuge gleichzeitig abgelegt bzw. in einem breiteren Schritt gleichzeitig neue Bearbeitungswerkzeuge aufgenommen werden.

Weiters kann es zweckmäßig sein, wenn die erste Arbeitsspindel und die zweite Arbeitsspindel unabhängig voneinander in der horizontalen Z-Achse und in der vertikalen Y-Achse verschiebbar sind. Dies bringt den Vorteil mit sich, dass die Werkstücke auch bei einer Schrägstellung der Werkstücktische gut bearbeitet werden können. Dies bringt außerdem den Vorteil mit sich, dass das erste Werkstück und das zweite Werkstück eine unterschiedliche Formgebung aufweisen können.

Ferner kann vorgesehen sein, dass ein erster Schwenkkopf ausgebildet ist, mittels welchem die erste Arbeitsspindel um die vertikale Y-Achse schwenkbar ist und dass ein zweiter Schwenkkopf ausgebildet ist, mittels welchem die zweite Arbeitsspindel um die vertikale Y-Achse schwenkbar ist. Insbesondere kann hierbei vorgesehen sein, dass die erste Arbeitsspindel ausschließlich um die vertikale Y-Achse schwenkbar ist und sonst um keine Achse schwenkbar ist und dass die zweite Arbeitsspindel ausschließlich um die vertikale Y-Achse schwenkbar ist und sonst um keine Achse schwenkbar ist. Durch diese Maßnahme kann die Flexibilität der Werkzeugmaschine weiter erhöht werden und dabei die Komplexität der Werkzeugmaschine möglichst geringgehalten werden.

Erfindungsgemäß ist ein Verfahren zum Betreiben einer Werkzeugmaschine vorgesehen. Das Verfahren umfasst die Verfahrensschritte:
- Bearbeiten eines ersten Werkstückes, welches an einer ersten vorderen Werkstückaufnahme der Werkstückspannvorrichtung gespannt ist und in einen Bearbeitungsraum der Werkzeugmaschine eingeschwenkt ist, mittels eines in der ersten Arbeitsspindel gespannten Bearbeitungswerkzeuges und zeitgleiches Beladen eines ersten hinteren Werkstückes an einer ersten hinteren Werkstückaufnahme der Werkstückspannvorrichtung, wobei die erste hintere Werkstückaufnahme in einen Beladeraum der Werkzeugmaschine eingeschwenkt ist;
- wechselndes Bearbeiten des ersten Werkstückes und des ersten hinteren Werkstückes mittels desselben in der ersten Arbeitsspindel gespannten Bearbeitungswerkzeuges, wobei in einem Pendelbetrieb die erste vordere Werkstückaufnahme der Werkstückspannvorrichtung oder die erste hintere Werkstückaufnahme der Werkstückspannvorrichtung in den Bearbeitungsraum der Werkzeugmaschine eingeschwenkt werden.

Das erfindungsgemäße Verfahren bringt den Vorteil mit sich, dass die Effizienz der Werkzeugmaschine verbessert werden kann.

In einer Ausführung ist es möglich, dass das Verfahren mittels einer Werkzeugmaschine ausgeführt wird, umfassend:
ein Maschinengestell in welchem ein Beladeraum und ein Bearbeitungsraum ausgebildet ist;
eine erste Arbeitsspindel, welche um eine erste Spindelachse drehbar gelagert ist, wobei die erste Arbeitsspindel entlang einer horizontalen Z-Achse, entlang einer horizontalen X-Achse und entlang einer vertikalen Y-Achse verschiebbar am Maschinengestell aufgenommen ist;
eine Werkstückspannvorrichtung, welche zum Aufnehmen eines ersten Werkstückes und eines ersten Hinteren Werkstückes ausgebildet ist. Wobei ein Schwenktisch ausgebildet ist, wobei der Schwenktisch
eine erste vordere Werkstückaufnahme zur direkten und unbeweglichen Aufnahme des ersten Werkstückes am Schwenktisch aufweist und
eine erste hintere Werkstückaufnahme zur direkten und unbeweglichen Aufnahme eines ersten hinteren Werkstückes am Schwenktisch aufweist,
wobei der Schwenktisch um eine Schwenktischachse, welche parallel zu einer horizontalen X-Achse ausgerichtet ist, schwenkbar gelagert ist, wobei je nach Schwenkstellung des Schwenktisches die erste vordere Werkstückaufnahme in den Bearbeitungsraum einschwenkbar ist oder die erste hintere Werkstückaufnahme in den Bearbeitungsraum einschwenkbar ist.

In einer weiteren Ausführung ist es möglich, dass das Verfahren mittels einer Werkzeugmaschine ausgeführt wird, umfassend:
ein Maschinengestell in welchem ein Beladeraum und ein Bearbeitungsraum ausgebildet ist;
eine erste Arbeitsspindel, welche um eine erste Spindelachse drehbar gelagert ist, wobei die erste Arbeitsspindel entlang einer horizontalen Z-Achse, entlang einer horizontalen X-Achse und entlang einer vertikalen Y-Achse verschiebbar am Maschinengestell aufgenommen ist;
eine Werkstückspannvorrichtung, welche zum Aufnehmen zumindest eines ersten Werkstückes und eines zweiten Werkstückes ausgebildet ist.

Weiters ist eine zweite Arbeitsspindel ausgebildet, welche um eine zweite Spindelachse drehbar gelagert ist, wobei die zweite Arbeitsspindel entlang der Z-Achse, entlang der X-Achse und entlang der Y-Achse verschiebbar am Maschinengestell aufgenommen ist, wobei die erste Arbeitsspindel und die zweite Arbeitsspindel vertikal übereinander angeordnet sind und die erste Arbeitsspindel zum Bearbeiten des ersten Werkstückes und die zweite Arbeitsspindel zum Bearbeiten des zweiten Werkstückes ausgebildet ist. Wobei ein Schwenktisch ausgebildet ist, wobei der Schwenktisch
eine erste vordere Werkstückaufnahme zur direkten und unbeweglichen Aufnahme des ersten Werkstückes am Schwenktisch und eine zweite vordere Werkstückaufnahme zur direkten und unbeweglichen Aufnahme des zweiten Werkstückes am Schwenktisch aufweist und eine erste hintere Werkstückaufnahme zur direkten und unbeweglichen Aufnahme eines ersten hinteren Werkstückes am Schwenktisch und eine zweite hintere Werkstückaufnahme zur direkten und unbeweglichen Aufnahme eines zweiten hinteren Werkstückes am Schwenktisch aufweist,
wobei der Schwenktisch um eine Schwenktischachse, welche parallel zu einer horizontalen X-Achse ausgerichtet ist, schwenkbar gelagert ist, wobei je nach Schwenkstellung des Schwenktisches die erste vordere Werkstückaufnahme und die zweite vordere Werkstückaufnahme in den Bearbeitungsraum einschwenkbar sind oder die erste hintere Werkstückaufnahme und die zweite hintere Werkstückaufnahme in den Bearbeitungsraum einschwenkbar sind. Hierbei kann vorgesehen sein, dass das Verfahren zusätzlich die Verfahrensschritte aufweist:
   - Bearbeiten eines zweiten Werkstückes, welches an einer zweiten vorderen Werkstückaufnahme der Werkstückspannvorrichtung gespannt ist und in einen Bearbeitungsraum der Werkzeugmaschine eingeschwenkt ist, mittels eines in der zweiten Arbeitsspindel gespannten Bearbeitungswerkzeuges und zeitgleiches Beladen eines zweiten hinteren Werkstückes an einer zweiten hinteren Werkstückaufnahme der Werkstückspannvorrichtung, wobei die zweite hintere Werkstückaufnahme in einen Beladeraum der Werkzeugmaschine eingeschwenkt ist;
   - wechselndes Bearbeiten des zweiten Werkstückes und des zweiten hinteren Werkstückes mittels desselben in der zweiten Arbeitsspindel gespannten Bearbeitungswerkzeuges, wobei in einem Pendelbetrieb die zweite vordere Werkstückaufnahme der Werkstückspannvorrichtung oder die zweite hintere Werkstückaufnahme der Werkstückspannvorrichtung in den Bearbeitungsraum der Werkzeugmaschine eingeschwenkt werden.

Vorteilhaft ist auch eine Ausprägung, gemäß welcher vorgesehen sein kann, dass das Beladen des ersten hinteren Werkstückes an der ersten hinteren Werkstückaufnahme der Werkstückspannvorrichtung in einem Zeitfenster erfolgt, in welchem das Bearbeiten des ersten Werkstückes kein Schwenken der ersten vorderen Werkstückaufnahme erfordert, wobei außerhalb dieses Zeitfensters während der Bearbeitung des ersten Werkstückes der erste Werkstücktisch um eine erste Schwenkachse beziehungsweise der Schwenktisch um die Schwenktischachse geschwenkt wird. Durch diese Maßnahme ist es möglich, dass das erste Werkstück zur flexibleren Bearbeitung verschwenkt werden kann und ein entsprechendes Zeitfenster zum Werkstückwechsel des ersten hinteren Werkstückes genutzt wird.

Insbesondere kann vorgesehen sein, dass das Beladen des ersten hinteren Werkstückes an der ersten hinteren Werkstückaufnahme der Werkstückspannvorrichtung in einem Zeitfenster erfolgt, in welchem das Bearbeitungswerkzeug gerade nicht in Eingriff mit dem Werkstück steht. Dies kann beispielsweise während einem Werkzeugwechsel erfolgen oder wenn das Bearbeitungswerkzeug im Eilgang relativ zum Werkstück neu positioniert wird. Dies bringt den Vorteil mit sich, dass durch diese Maßnahme etwaige Stöße beim Werkstückwechsel nicht zu Bearbeitungsfehlern beim Werkstück, welches gerade bearbeitet wird führen.

In einer alternativen Ausführung ist es auch denkbar, dass das Beladen des ersten hinteren Werkstückes an der ersten hinteren Werkstückaufnahme der Werkstückspannvorrichtung parallel zum Bearbeiten des ersten Werkstückes erfolgt, wobei während der Bearbeitung des ersten Werkstückes der erste Werkstücktisch um eine erste Schwenkachse beziehungsweise der Schwenktisch um die Schwenktischachse geschwenkt wird, wobei
eine Beladevorrichtung zum Beladen des ersten hinteren Werkstückes an der ersten hinteren Werkstückaufnahme entsprechend der Verschwenkung des ersten Werkstücktisches um die erste Schwenkachse beziehungsweise des Schwenktisches um die Schwenktischachse,
das erste hintere Werkstück entsprechend mitverschwenkt, um eine Beladung während des Schwenkvorganges zu ermöglichen. Dies kann insbesondere bei komplexen Werkstücken notwendig sein, welche eine fortwährende Verschwenkung des Werkstückes erfordern.

Mit anderen Worten ausgedrückt kann vorgesehen sein, dass das Beladen des ersten hinteren Werkstückes an der ersten hinteren Werkstückaufnahme der Werkstückspannvorrichtung in einem Zeitfenster erfolgt, in welchem der erste Werkstücktisch um eine erste Schwenkachse beziehungsweise der Schwenktisch um die Schwenktischachse geschwenkt wird, wobei eine Bewegung einer Vorrichtung zum Beladen des ersten hinteren Werkstückes mit der Bewegung der ersten hinteren Werkstückaufnahme synchronisiert ist. Dies bringt den Vorteil mit sich, dass ein Werkstückwechsel erfolgen kann, auch wenn kein Zeitfenster zur Verfügung steht, in welchem der Werkstücktisch bzw. der Schwenktisch nicht verschwenkt wird. Insbesondere kann hierbei vorgesehen sein, dass ein Auflegen des ersten hinteren Werkstückes an der ersten hinteren Werkstückaufnahme sanft erfolgt, sodass ein Bearbeitungsfehler möglichst gering ausfällt. Insbesondere kann vorgesehen sein, dass das Zeitfenster so gewählt wird, dass es sich bei der parallel durchgeführten Bearbeitung um keine Endbearbeitung einer Oberfläche handelt, sodass etwaige Bearbeitungsfehler durch Erschütterungen beim Beladen des ersten hinteren Werkstückes in einem späteren Bearbeitungsschritt wieder abgetragen werden.

Gemäß einer Weiterbildung ist es möglich, dass mittels eines Digitalrechners der Programmablauf zum Bearbeiten des ersten Werkstückes und des ersten hinteren Werkstückes analysiert wird, wobei das Zeitfenster zum Beladen des ersten hinteren Werkstückes mittels des Digitalrechners automatisiert festgelegt wird. Dies bringt den Vorteil mit sich, dass das Zeitfenster nicht vom Programmierer bzw. Maschinenbediener festgelegt werden muss. Insbesondere kann hierbei vorgesehen sein, dass der Digitalrechner eine Auswertung des Programmablaufes durchführt. Der Digitalrechner kann hierbei einen Optimierungsalgorithmus gespeichert haben, mit welchem das Zeitfenster zum Beladen des ersten hinteren Werkstückes berechnet wird.

Ferner kann es zweckmäßig sein, wenn in einem Arbeitsschritt der Schwenktisch,
mit der ersten vordere Werkstückaufnahme und dem daran aufgenommenen ersten Werkstück und der zweiten vorderen Werkstückaufnahme und dem daran aufgenommenen zweiten Werkstück
sowie mit der ersten hinteren Werkstückaufnahme und dem dran aufgenommenen ersten hinteren Werkstück und der zweiten hinteren Werkstückaufnahme und dem dran aufgenommenen zweiten hinteren Werkstück,
um die Schwenktischachse in einen Winkel zwischen 45° und 135°, insbesondere um 90° zu einer vertikalen Lage verkippt ist, wobei gleichzeitig das erste Werkstück mittels der zweiten Arbeitsspindel bearbeitet wird und das zweite rückwärtige Werkstück mittels der ersten Arbeitsspindel bearbeitet wird. Dies bringt den Vorteil mit sich, dass durch diese Maßnahme eine Bearbeitung einer im Hinblick auf die Werkstückspannung seitliche Fläche des ersten Werkstückes bzw. des zweiten rückwärtigen Werkstückes ermöglicht wird.

Darüber hinaus kann vorgesehen sein, dass in einem Arbeitsschritt der Schwenktisch,
mit der ersten vorderen Werkstückaufnahme und dem daran aufgenommenen ersten Werkstück und der zweiten vorderen Werkstückaufnahme und dem daran aufgenommenen zweiten Werkstück
um die Schwenktischachse in einen Winkel zwischen 0,5° und 70° zu einer vertikalen Lage verkippt ist, wobei gleichzeitig das erste Werkstück mittels der ersten Arbeitsspindel und das zweite Werkstück mittels der zweiten Arbeitsspindel bearbeitet wird, wobei die erste Arbeitsspindel und die zweite Arbeitsspindel in unterschiedlichen Positionen entlang der horizontalen Z-Achse positioniert sind, sodass die Verschwenkung des Schwenktisches ausgeglichen wird. Dies kann notwendig sein, um bei einem verkippten Schwenktisch beide Werkstücke gleichzeitig bearbeiten zu können.

Weiters kann es zweckmäßig sein, wenn das an der ersten vorderen Werkstückaufnahme aufgenommene erste Werkstück und das an der zweiten vorderen Werkstückaufnahme aufgenommene zweite Werkstück spiegelgleich ausgebildet sind, wobei eine Verstellung der ersten Arbeitsspindel und der zweiten Arbeitsspindel in der vertikalen Y-Achse spiegelgleich erfolgt. Somit können beispielsweise linke und rechte Bauteile für Fahrzeuge einfach gefertigt werden.

Ferner kann vorgesehen sein, dass während des Bearbeitens des ersten Werkstückes die erste Arbeitsspindel mittels eines ersten Schwenkkopfes um die vertikale Y-Achse geschwenkt wird. Dies bringt den Vorteil mit sich durch diese Maßnahme die Flexibilität bei der Bearbeitung des ersten Werkstückes weiter erhöht werden kann.

Weiters kann vorgesehen sein, dass in der ersten Arbeitsspindel und in der zweiten Arbeitsspindel zwei unterschiedliche Bearbeitungswerkzeuge gespannt sind, wobei mittels des in der ersten Arbeitsspindel gespannten Bearbeitungswerkzeuges sowohl das erste Werkstück als auch das zweite Werkstück bearbeitet wird und mittels des in der zweiten Arbeitsspindel gespannten Bearbeitungswerkzeuges sowohl das erste Werkstück als auch das zweite Werkstück bearbeitet wird. Dies bringt den Vorteil mit sich, dass durch diese Maßnahme die Effizienz der Werkzeugmaschine erhöht werden kann, da die Nebenzeiten zum Wechseln der Bearbeitungswerkzeuge entfallen können. Hierbei kann vorgesehen sein, dass die erste Arbeitsspindel und die zweite Arbeitsspindel zeitgleich eine Bearbeitung am ersten Werkstück durchführen und zu einem späteren Zeitpunkt zeitgleich eine Bearbeitung am zweiten Werkstück durchführen. Alternativ kann hierbei vorgesehen sein, dass die erste Arbeitsspindel eine Bearbeitung am ersten Werkstück durchführt und die zweite Arbeitsspindel zeitgleich eine Bearbeitung am zweiten Werkstück durchführt und zu einem späteren Zeitpunkt die zweite Arbeitsspindel eine Bearbeitung am ersten Werkstück durchführt und zeitgleich die erste Arbeitsspindel eine Bearbeitung am zweiten Werkstück durchführt. Hierfür ist es natürlich notwendig, dass die Arbeitsspindeln dementsprechend weit entlang der Y-Achse verschoben werden können, um eine derartige Bearbeitung durchzuführen.

Diese Maßnahme ist besonders sinnvoll, wenn die Bearbeitungsschritte mit den unterschiedlichen Bearbeitungswerkzeugen in etwa gleich lange dauern. Dies kann beispielsweise das Bohren eines Loches mittels eines in der ersten Arbeitsspindel gespannten Bohrwerkzeuges und das Schneiden eines Gewindes oder das Senken mittels eines in der zweiten Arbeitsspindel gespannten Gewindeschneiders bzw. Senkwerkzeuges sein.

Ein Bearbeitungswerkzeug im Sinne dieses Dokumentes kann beispielsweise ein spanabhebendes Bearbeitungswerkzeug sein. Ein Bearbeitungswerkzeug im Sinne dieses Dokumentes kann beispielsweise auch ein Reibrührschweißwerkzeug sein. Im Weitesten Sinne kann als Bearbeitungswerkzeug auch ein in der Arbeitsspindel aufgenommenes Messmittel oder Prüfmittel gesehen werden.

Der Bearbeitungsraum im Sinne dieses Dokumentes ist jener Raum in der Werkzeugmaschine, in dem die spanabhebende Bearbeitung stattfindet. Insbesondere kann vorgesehen sein, dass der Bearbeitungsraum von einer Einhausung umgeben ist, um sämtliche Emissionen aus dem Bearbeitungsraum möglichst gering zu halten.

Der Beladeraum im Sinne dieses Dokumentes liegt an der vom Bearbeitungsraum abgewandten Seite der Werkstückspannvorrichtung.

Der Beladeraum kann ebenfalls von einer Einhausung umgeben sein. Insbesondere kann vorgesehen sein, dass der Bearbeitungsraum und der Beladeraum von einer gemeinsamen Einhausung umgeben sind, wobei der Beladeraum durch die Werkstückspannvorrichtung vom Bearbeitungsraum getrennt ist. Ein derartiges Konzept findet besonders bei vollautomatisierten Werkzeugmaschinen Anwendung, bei welchen eine Handlingvorrichtung zum Spannen der Werkstücke an der Werkstückspannvorrichtung vorgesehen ist.

In einer alternativen Ausführungsvariante ist es auch denkbar, dass der Beladeraum keine Einhausung aufweist, sondern frei zugänglich ist. Bei derartigen Werkzeugmaschinen bildet die Werkstückspannvorrichtung einen Teil der Einhausung des Bearbeitungsraumes.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines ersten Ausführungsbeispiels einer Werkzeugmaschine mit einem ersten Werkstücktisch und einem zweiten Werkstücktisch;
- Fig. 2: eine schematische Seitenansicht eines Ausführungsbeispiels der Werkzeugmaschine mit einem ersten Werkstücktisch und einem zweiten Werkstücktisch mit Radien;
- Fig. 3: eine schematische Seitenansicht eines Ausführungsbeispiels der Werkzeugmaschine mit einem ersten Werkstücktisch und einem zweiten Werkstücktisch mit einem Trennwandsegment;
- Fig. 4: eine perspektivische Ansicht eines weiteren Ausführungsbeispiels der Werkzeugmaschine mit einem Schwenktisch und einem Werkzeugmagazin;
- Fig. 5: eine schematische Seitenansicht eines Ausführungsbeispiels der Werkzeugmaschine mit dem Schwenktisch und zueinander versetzt angeordneten Werkstücken;
- Fig. 6: eine schematische Seitenansicht eines Ausführungsbeispiels der Werkzeugmaschine mit dem Schwenktisch und hintereinander angeordneten Werkstücken, wobei der Schwenktisch um 90° verschwenkt ist;
- Fig. 7: eine perspektivische Rückansicht eines weiteren Ausführungsbeispiels der Werkzeugmaschine mit zwei Hauptverstelleinheiten;
- Fig. 8: eine Draufsicht eines Ausführungsbeispiels einer ersten Arbeitsspindel mit einem ersten Schwenkkopf;
- Fig. 9: eine Draufsicht eines Ausführungsbeispiels einer zweiten Arbeitsspindel mit einem zweiten Schwenkkopf;
- Fig. 10: eine schematische Seitenansicht eines Ausführungsbeispiels der Werkzeugmaschine mit dem Schwenktisch und einer Arbeitsspindel.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

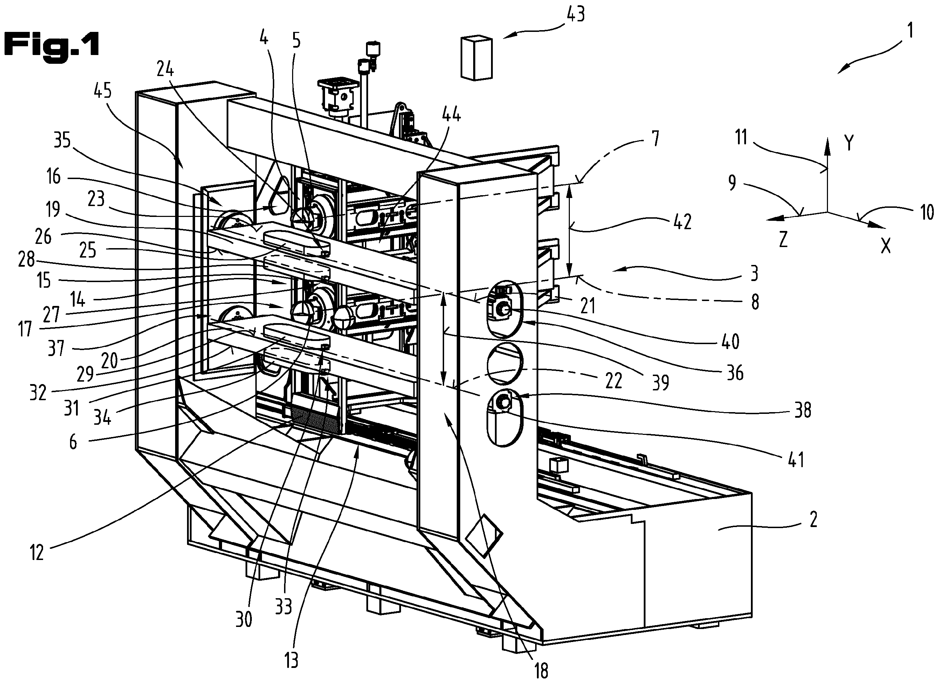

Fig. 1 zeigt eine schematische Darstellung einer Werkzeugmaschine 1 zur spanabhebenden Bearbeitung von Werkstücken 25, 31, 28, 34. Die Werkzeugmaschine 1 weist ein Maschinengestell 2 auf, welches als Basis für die daran angebauten Bauteile dient.

Das Maschinengestell 2 ist in Fig. 1 der Übersichtlichkeit halber nur schematisch dargestellt. Es sei jedoch festgehalten, dass das Maschinengestell 2 am Aufstellungsort verankert sein kann. Darüber hinaus kann das Maschinengestell 2 natürlich zur Aufnahme sämtlicher Bauteile der Werkzeugmaschine 1 dienen.

Weiters ist eine Spindelverstellvorrichtung 3 ausgebildet, welche am Maschinengestell 2 angeordnet ist bzw. mit diesem gekoppelt ist. Die Spindelverstellvorrichtung 3 kann zur Aufnahme einer ersten Arbeitsspindel 5 und einer zweiten Arbeitsspindel 6 dienen.

Die Spindelverstellvorrichtung 3 kann einen Arbeitskopf 4 aufweisen, an welchem eine erste Arbeitsspindel 5 und eine zweite Arbeitsspindel 6 gelagert sein können. Die erste Arbeitsspindel 5 ist um eine erste Spindelachse 7 drehbar am Arbeitskopf 4 gelagert und die zweite Arbeitsspindel 6 ist um eine zweite Spindelachse 8 drehbar am Arbeitskopf 4 gelagert. Die beiden Arbeitsspindeln 5, 6 dienen jeweils zur Aufnahme eines Bearbeitungswerkzeugs 51 und weisen hierzu eine Spannvorrichtung zur Aufnahme des Bearbeitungswerkzeugs 51 auf.

Die Arbeitsspindeln 5, 6 sind mittels der Spindelverstellvorrichtung 3 in einer Z-Achse 9, in einer X-Achse 10 und in einer im rechten Winkel zur Z-Achse 9 und X-Achse 10 angeordneten Y-Achse 11 relativ zum Maschinengestell 2 verstellbar.

In einer weiteren Ausführungsvariante kann vorgesehen sein, dass die Arbeitsspindeln 5, 6 unverschieblich zueinander am Arbeitskopf 4 gelagert sind und somit nur der Arbeitskopf 4 in der Z-Achse 9, in der X-Achse 10 und in der Y-Achse 11 relativ zum Maschinengestell 2 verschoben werden muss, um die Arbeitsspindeln 5, 6 synchron zueinander zu bewegen.

Insbesondere kann vorgesehen sein, dass die Z-Achse 9 horizontal angeordnet ist. Die erste Spindelachse 7 die zweite Spindelachse 8 können parallel zur Z-Achse 9 angeordnet sein. Weiters kann vorgesehen sein, dass die X-Achse 10 ebenfalls horizontal angeordnet ist. Die X-Achse 10 ist im rechten Winkel zur Z-Achse 9 angeordnet.

Die Spindelverstellvorrichtung 3 kann eine Hauptverstelleinheit 12 aufweisen, welche mittels einer X-Achsen-Linearführung 13 mit dem Maschinengestell 2 gekoppelt ist. Zur vereinfachten Veranschaulichung ist die X-Achsen-Linearführung 13 nur rudimentär dargestellt. Insbesondere kann vorgesehen sein, dass die X-Achsen-Linearführung 13 vier oder auch mehr Führungsschlitten aufweist, welche mit der Hauptverstelleinheit 12 gekoppelt sind und welche mit zwei Führungsschienen zusammenwirken, die mit dem Maschinengestell 2 gekoppelt sind.

Durch die X-Achsen-Linearführung 13 ist die Hauptverstelleinheit 12 in Richtung der X-Achse 10 relativ bezüglich des Maschinengestells 2 verschiebbar.

Weiters kann vorgesehen sein, dass eine Höhenverstelleinheit 14 ausgebildet ist, welche mittels einer Y-Achsen-Linearführung 15 mit der Hauptverstelleinheit 12 gekoppelt ist. Durch die Y-Achsen-Linearführung 15 ist die Höhenverstelleinheit 14 entlang der Y-Achse 11 relativ zur Hauptverstelleinheit 12 bzw. relativ zum Maschinengestell 2 verschiebbar.

In einer ersten Ausführungsvariante kann vorgesehen sein, dass die erste Arbeitsspindel 5 an einer ersten Höhenverstelleinheit 14 und die zweite Arbeitsspindel 6 an einer zweiten Höhenverstelleinheit 14 angeordnet sind und somit unabhängig voneinander entlang einer Y-Achse 11 verschiebbar sind. Bei dieser Ausführungsvariante kann die erste Höhenverstelleinheit 14 einen ersten Antrieb aufweisen und die zweite Höhenverstelleinheit 14 einen zweiten Antrieb aufweisen. Die beiden Höhenverstelleinheiten 14 können hierbei beide mittels einer Y-Achsen-Linearführung 15 an der Hauptverstelleinheit 12 gelagert sein.

In einer weiteren Ausführungsvariante kann vorgesehen sein, dass die erste Arbeitsspindel 5 und die zweite Arbeitsspindel 6 an einer gemeinsamen Höhenverstelleinheit 14 angeordnet sind und somit gemeinsam entlang einer Y-Achse 11 verschiebbar sind. Bei dieser Ausführungsvariante wird für die gemeinsame Höhenverstelleinheiten 14 nur ein einzelner Antrieb benötigt.

Die Y-Achsen-Linearführung 15 kann ebenfalls eine Führungsschiene aufweisen, welche an der Hauptverstelleinheit 12 angeordnet ist und welche mit einem oder mehreren Führungsschlitten gekoppelt ist, die an der ersten Arbeitsspindel 5 bzw. der zweiten Arbeitsspindel 6 angeordnet sind.

Weiters kann, wie aus der Darstellung nach Fig. 1 ersichtlich, vorgesehen sein, dass die erste Arbeitsspindel 5 mittels einer ersten Z-Achsen-Linearführung 16 in der Z-Achse 9 verschiebbar ist und dass die zweite Arbeitsspindel 6 mittels einer zweiten Z-Achsen-Linearführung 17 in der Z-Achse 9 verschiebbar ist, wobei die erste Arbeitsspindel 5 und die zweite Arbeitsspindel 6 unabhängig voneinander verschiebbar sind. Hierbei kann vorgesehen sein, dass die erste Arbeitsspindel 5 mittels eines ersten Antriebes in der Z-Achse 9 verschiebbar ist und die zweite Arbeitsspindel 6 mittels eines zweiten Antriebes in der Z-Achse 9 verschiebbar ist.

Außerdem umfasst die Werkzeugmaschine 1 eine Werkstückspannvorrichtung 18, welche zur Aufnahme der zu bearbeitenden Werkstücke 25, 31, 28, 34 dient.

Die Werkstückspannvorrichtung 18 kann einen ersten Werkstücktisch 19 und einen zweiten Werkstücktisch 20 aufweisen. Der erste Werkstücktisch 19 ist bezüglich einer ersten Schwenkachse 21 relativ zum Maschinengestell 2 verschwenkbar. Der zweite Werkstücktisch 20 ist bezüglich einer zweiten Schwenkachse 22 relativ zum Maschinengestell 2 verschwenkbar.

Die beiden Schwenkachsen 21, 22 der beiden Werkstücktische 19, 20 sind parallel zur X-Achse 10 angeordnet.

Insbesondere kann vorgesehen sein, dass der erste Werkstücktisch 19 an einer ersten Werkstücktischvorderseite 23 eine erste vordere Werkstückaufnahme 24 zur Aufnahme des ersten Werkstückes 25 aufweist. Weiters kann vorgesehen sein, dass der erste Werkstücktisch 19 an einer ersten Werkstücktischrückseite 26 eine erste hintere Werkstückaufnahme 27 zur Aufnahme eines ersten hinteren Werkstückes 28 aufweist.

Weiters kann vorgesehen sein, dass der zweite Werkstücktisch 20 an einer zweiten Werkstücktischvorderseite 29 eine zweite vordere Werkstückaufnahme 30 zur Aufnahme des zweiten Werkstückes 31 aufweist. Weiters kann vorgesehen sein, dass der zweite Werkstücktisch 20 an einer zweiten Werkstücktischrückseite 32 eine zweite hintere Werkstückaufnahme 33 zur Aufnahme eines zweiten hinteren Werkstückes 34 aufweist.

Insbesondere kann vorgesehen sein, dass das erste Werkstück 25 und das zweite Werkstück 31 in deren Außenkontur gleich zueinander ausgebildet sind und an den beiden Werkstücken 25, 31 die gleichen Bearbeitungsschritte durchgeführt werden. Weiters kann natürlich auch vorgesehen sein, dass das das erste Werkstück 25 und das erste hintere Werkstück 28 in deren Außenkontur gleich zueinander ausgebildet sind und an den beiden Werkstücken 25, 28 die gleichen Bearbeitungsschritte durchgeführt werden. Weiters kann natürlich auch vorgesehen sein, dass das zweite Werkstück 31 und das zweite hintere Werkstück 34 in deren Außenkontur gleich zueinander ausgebildet sind und an den beiden Werkstücken 31, 34 die gleichen Bearbeitungsschritte durchgeführt werden.

Die beiden Werkstücktische 19, 20 sind der Übersichtlichkeit halber in Fig. 1 nur rudimentär dargestellt. Natürlich können verschiedenste Befestigungsmöglichkeiten zur Befestigung der Werkstücke 25, 31, 28, 34 an den Werkstücktischen 19, 20 vorgesehen sein. Insbesondere kann vorgesehen sein, dass an den beiden Werkstücktischen 19, 20 jeweils Rundtische ausgebildet sind, welche zur Befestigung der Werkstücke 25, 31 und gleichzeitig zum Verdrehen der der Werkstücke 25, 31, 28, 34 relativ zu den Werkstücktischen 19, 20 dienen.

Der erste Werkstücktisch 19 ist mittels einer ersten Schwenklagerung 35 und einer zweiten Schwenklagerung 36 drehbar am Maschinengestell 2 gelagert. Analog dazu ist der zweite Werkstücktisch 20 mittels einer ersten Schwenklagerung 37 und einer zweiten Schwenklagerung 38 drehbar am Maschinengestell 2 gelagert. Die Schwenklagerungen 35, 36, 37, 38 können beispielsweise in Form von Lagerböcken ausgebildet sein, welche entsprechenden Aufnahmen am Werkstücktisch 19 befestigt sind.

Wie aus Fig. 1 ersichtlich, kann vorgesehen sein, dass der erste Werkstücktisch 19 einen Werkstückspannbereich aufweist, welcher sich zwischen der ersten Schwenklagerung 35 und der zweiten Schwenklagerung 36 erstreckt. Analog dazu kann vorgesehen sein, dass der zweite Werkstücktisch 20 einen Werkstückspannbereich aufweist, welcher sich zwischen der ersten Schwenklagerung 37 und der zweiten Schwenklagerung 38 des zweiten Werkstücktisches 20 erstreckt.

Der Werkstückspannbereich des ersten Werkstücktisches 19 weist eine erste Werkstückspannlänge auf. Der Werkstückspannbereich des zweiten Werkstücktisches 20 weist eine zweite Werkstückspannlänge auf. Vorzugsweise ist vorgesehen, dass der erste Werkstücktisch 19 und der zweite Werkstücktisch 20 gleich ausgebildet sind.

Die beiden Werkstücktische 19, 20 bzw. die beiden Schwenkachsen 21, 22 sind in einem Abstand 39 zueinander angeordnet. Der Abstand 39 erstreckt sich ebenfalls in Richtung der Y-Achse 11. Durch die beschriebene Ausprägung wird erreicht, dass die erste Arbeitsspindel 5 dem ersten Werkstücktisch 19 zugeordnet ist und dass die zweite Arbeitsspindel 6 dem zweiten Werkstücktisch 20 zugeordnet ist.

Insbesondere kann vorgesehen sein, dass in der Werkstückspannvorrichtung 18 eine Verstellvorrichtung angeordnet ist, mittels welcher der Abstand 39 der beiden Werkstücktische 19, 20 bzw. der beiden Schwenkachsen 21, 22 zueinander verstellt werden kann.

Mittels der erfindungsgemäßen Werkzeugmaschine 1 können zwei Werkstücke 25, 31, die baugleich ausgebildet sind, parallel zueinander bearbeitet werden. Hierbei wird das erste Werkstück 25 am ersten Werkstücktisch 19 und das zweite Werkstück 31 am zweiten Werkstücktisch 20 gespannt. Das Werkzeug der ersten Arbeitsspindel 5 bearbeitet das erste Werkstück 25 und das Werkzeug der zweiten Arbeitsspindel 6 bearbeitet das zweite Werkstück 31. Durch den erfindungsgemäßen Aufbau der Werkzeugmaschine 1 kann die Bearbeitung des ersten Werkstückes 25 und des zweiten Werkstückes 31 synchron zueinander erfolgen. Somit können mittels einer möglichst einfach aufgebauten Werkzeugmaschine 1 zwei Werkstücke 25, 31 gleichzeitig bearbeitet werden, wodurch die Auslastung der Werkzeugmaschine 1 bzw. deren Produktivität verbessert werden kann.

Weiters kann parallel zum Bearbeiten des ersten Werkstückes 25, welches an der ersten Werkstücktischvorderseite 23 gespannt ist, das erste hintere Werkstück 28 an der ersten Werkstücktischrückseite 26 eingewechselt werden.

Weiters kann parallel zum Bearbeiten des zweiten Werkstückes 31, welches an der zweiten Werkstücktischvorderseite 29 gespannt ist, das zweite hintere Werkstück 34 an der zweiten Werkstücktischrückseite 32 eingewechselt werden.

Darüber hinaus kann vorgesehen sein, dass der erste Werkstücktisch 19 eine erste Antriebseinheit 40 zum verschwenken aufweist und der zweite Werkstücktisch 20 eine zweite Antriebseinheit 41 zum Verschwenken aufweist. Bei einem derartigen Ausführungsbeispiel können der erste Werkstücktisch 19 und der zweite Werkstücktisch 20 unabhängig voneinander verschwenkt werden.

Die erste Antriebseinheit 40 und die zweite Antriebseinheit 41 können beispielsweise jeweils als Torquemotor ausgeführt sein.

Hierbei kann vorgesehen sein, dass der Rotor des Torquemotors jeweils direkt mit den Werkstücktischen 19, 20 drehmomentgekoppelt ist.

In einer Alternativvariante kann vorgesehen sein, dass die Werkstücktische 19, 20 mittels einer gemeinsamen Antriebseinheit geschwenkt werden.

Der die gemeinsame Antriebseinheit, insbesondere ein Torquemotor, kann beispielsweise mittels eines Riementriebes mit den beiden Werkstücktischen 19, 20 gekoppelt sein. Alternativ dazu kann vorgesehen sein, dass der gemeinsame Antriebseinheit mittels eines Schneckengetriebes mit den beiden Werkstücktischen 19, 20 gekoppelt ist.

Weiters kann vorgesehen sein, dass die beiden Arbeitsspindeln 5, 6 von einer gemeinsamen Antriebseinheit angetrieben werden. Die Antriebseinheit kann beispielsweise durch einen Drehstromasynchronmotor gebildet sein, welcher mit einem Frequenzumrichter angesteuert wird.

Weiters ist es auch denkbar, dass die Antriebseinheit in Form eines Synchronmotors ausgebildet ist.

Natürlich kann auch vorgesehen sein, dass jede der Arbeitsspindeln 5, 6 von einer eigenen Antriebseinheit angetrieben wird. Hierbei kann vorgesehen sein, dass die Arbeitsspindel 5, 6 gleichzeitig der Läufer der Antriebseinheit ist.

Weiters kann vorgesehen sein, dass ein Abstand 42 zwischen der ersten Arbeitsspindel 5 und der zweiten Arbeitsspindel 6 in der vertikalen Y-Achse 11 verstellbar ist.

Weiters kann vorgesehen sein, dass ein Digitalrechner 43 ausgebildet ist, welcher zur Steuerung der Werkzeugmaschine 1 dienen kann.

Wie aus Fig. 1 weiters ersichtlich, kann vorgesehen sein, dass im Bereich der Arbeitsspindeln 5, 6 ein Bearbeitungsraum 44 ausgebildet ist. Der Bearbeitungsraum 44 kann durch eine nicht dargestellte Einhausung eingehaust sein beziehungsweise durch den ersten Werkstücktisch 19 und den zweiten Werkstücktisch 20 begrenzt sein. An der zum Bearbeitungsraum 44 gegenüberliegenden Seite des ersten Werkstücktisches 19 und des zweiten Werkstücktisches 20 kann ein Beladeraum 45 ausgebildet sein. Im Beladeraum 45 kann eine Manipulationsvorrichtung zum Handeln der Werkstücke 25, 31, 28, 34 angeordnet sein.

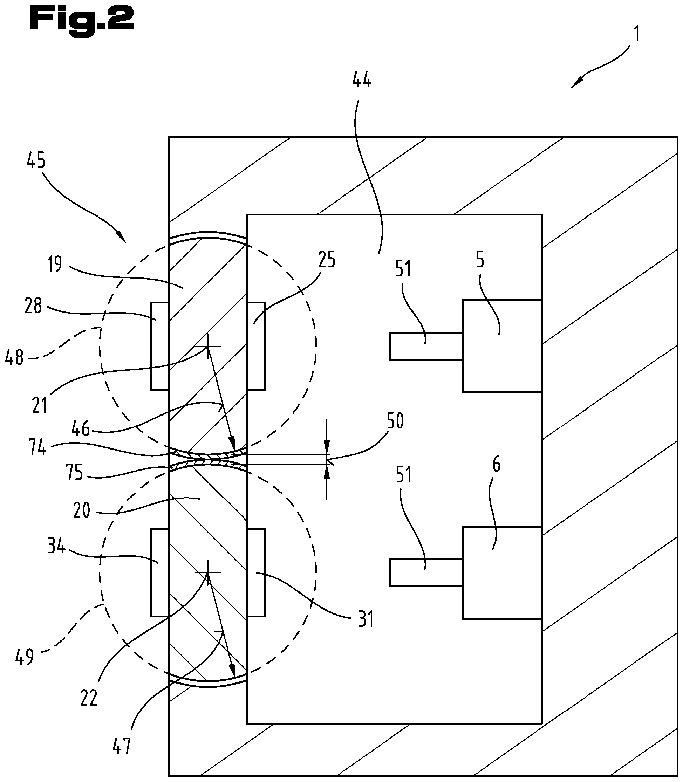

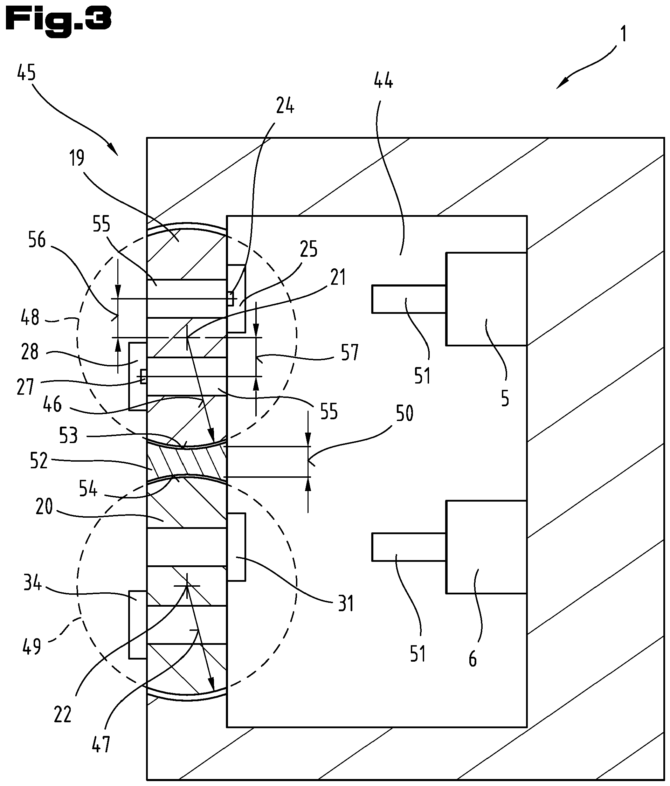

In den Figuren 2 und 3 sind in einer schematischen Darstellung weitere und gegebenenfalls für sich eigenständige Ausführungsformen der Werkzeugmaschine 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Insbesondere wird darauf hingewiesen, dass das Ausführungsbeispiel jener Werkzeugmaschinen 1, welche in den Figuren 2 und 3 dargestellt sind, die gleichen Merkmale oder zumindest teilweise die gleichen Merkmale wie jenes Ausführungsbeispiel der Werkzeugmaschine 1, welche in Fig. 1 dargestellt ist aufweisen kann. Zum besseren Verständnis wird in den Figuren 2 und 3 eine stark schematisch vereinfachte Darstellung gewählt.

Wie aus Fig. 2 ersichtlich, kann vorgesehen sein, dass der erste Werkstücktisch 19 einen ersten Radius 46 aufweist, welcher an einen ersten Flugkreis 48 des ersten Werkstücktisches 19 angepasst ist. Der erste Radius 46 kann den Abschluss des ersten Werkstücktisches 19 bilden.

Weiters kann vorgesehen sein, dass der zweite Werkstücktisch 20 einen zweiten Radius 47 aufweist, welcher an einen zweiten Flugkreis 49 des zweiten Werkstücktisches 20 angepasst ist. Der zweite Radius 47 kann den Abschluss des zweiten Werkstücktisches 20 bilden.

Weiters kann vorgesehen sein, dass der erste Flugkreis 48 des ersten Werkstücktisches 19 und der zweite Flugkreis 49 des zweiten Werkstücktisches 20 in einem Flugkreisabstand 50 zwischen 0,5mm und 2mm zueinander angeordnet sind, um eine möglichst gute Abdichtung zwischen dem ersten Werkstücktisch 19 und dem zweiten Werkstücktisch 20 zu erreichen. Durch diese Maßnahme kann der Bearbeitungsraum 44 und der Beladeraum 45 voneinander separiert werden, um einen Austritt von Spänen oder Kühlmedium aus dem Bearbeitungsraum 44 in den Beladeraum 45 möglichst hintanzuhalten.

In Fig. 2 sind auch die in den Arbeitsspindeln 5, 6 aufgenommenen Bearbeitungswerkzeuge 51 gut ersichtlich.

Wie aus Fig. 2 weiters ersichtlich, kann vorgesehen sein, dass der erste Werkstücktisch 19 am ersten Radius 46 ein erstes Dichtelement 74 aufweist. Das erste Dichtelement 74 ist zur Darstellung eines Ausführungsbeispiels mit erstem Dichtelement 74 und eines Ausführungsbeispiels ohne erstem Dichtelement 74 nur an einer Seite des ersten Werkstücktisches 19 dargestellt. Zweckmäßig kann jedoch vorgesehen sein, dass an beiden Seiten des ersten Werkstücktisches 19 ein erstes Dichtelement 74 angeordnet ist, oder eben kein erstes Dichtelement 74 angeordnet ist.

Weiters kann vorgesehen sein, dass der zweite Werkstücktisch 20 am zweiten Radius 47 ein zweites Dichtelement 75 aufweist. Das zweite Dichtelement 75 ist zur Darstellung eines Ausführungsbeispiels mit zweitem Dichtelement 75 und eines Ausführungsbeispiels ohne zweitem Dichtelement 75 nur an einer Seite des zweiten Werkstücktisches 20 dargestellt. Zweckmäßig kann jedoch vorgesehen sein, dass an beiden Seiten des zweiten Werkstücktisches 20 ein zweites Dichtelement 75 angeordnet ist, oder eben kein zweites Dichtelement 75 angeordnet ist.

Wie in der weiteren Ausführung aus Fig. 3 ersichtlich, kann vorgesehen sein, dass der erste Werkstücktisch 19 einen ersten Radius 46 aufweist, welcher an einen ersten Flugkreis 48 des ersten Werkstücktisches 19 angepasst ist. Der erste Radius 46 kann den Abschluss des ersten Werkstücktisches 19 bilden.

Das erste Dichtelement 74 und das zweite Dichtelement 75 kann natürlich auch im Ausführungsbeispiel nach Fig. 3 vorgesehen sein.

Weiters kann vorgesehen sein, dass der zweite Werkstücktisch 20 einen zweiten Radius 47 aufweist, welcher an einen zweiten Flugkreis 49 des zweiten Werkstücktisches 20 angepasst ist. Der zweite Radius 47 kann den Abschluss des zweiten Werkstücktisches 20 bilden.

Weiters kann vorgesehen sein, dass zwischen dem ersten Werkstücktisch 19 und dem zweiten Werkstücktisch 20 ein Trennwandsegment 52 angeordnet ist, wobei das Trennwandsegment 52 eine an den ersten Flugkreis 48 und den zweiten Flugkreis 49 angepasste Formgebung aufweist. Insbesondere kann das Trennwandsegment 52 zum ersten Werkstücktisch 19 eine erste konkave Formgebung 53 aufweist und zum zweiten Werkstücktisch 20 eine zweite konkave Formgebung 54 aufweist.

Dadurch kann eine möglichst gute Abdichtung zwischen dem ersten Werkstücktisch 19 und dem zweiten Werkstücktisch 20 erreicht werden. Durch diese Maßnahme kann der Bearbeitungsraum 44 und der Beladeraum 45 voneinander separiert werden, um einen Austritt von Spänen oder Kühlmedium aus dem Bearbeitungsraum 44 in den Beladeraum 45 möglichst hintanzuhalten.

Natürlich kann in beiden Ausführungsvarianten der Figuren 2 und 3, wie aus diesen ersichtlich, auch die Einhausung der Werkzeugmaschine 1 eine zum ersten Werkstücktisch 19 beziehungsweise zum zweiten Werkstücktisch 20 angepasste konkave Formgebung aufweisen.

Wie aus Fig. 3 weiters ersichtlich, kann vorgesehen sein, dass am ersten Werkstücktisch 19 die erste vordere Werkstückaufnahme 24 in einem ersten vorderen Werkstückaufnahmeabstand 56 zur ersten Schwenkachse 21 angeordnet ist. Weiters kann vorgesehen sein dass die erste hintere Werkstückaufnahme 27 in einem ersten hinteren Werkstückaufnahmeabstand 57 zur ersten Schwenkachse 21 angeordnet ist. Hierbei kann vorgesehen sein, dass sich der erste vordere Werkstückaufnahmeabstand 56 und der erste hintere Werkstückaufnahmeabstand 57 bezüglich der ersten Schwenkachse 21 in unterschiedliche Seiten des ersten Werkstücktisches 19 erstrecken. Insbesondere kann vorgesehen sein, dass der erste vordere Werkstückaufnahmeabstand 56 und der erste hintere Werkstückaufnahmeabstand 57 gleich groß sind, sodass die erste vordere Werkstückaufnahme 24 und die erste hintere Werkstückaufnahme 27 symmetrisch am ersten Werkstücktisch 19 angeordnet ist.

Weiters kann vorgesehen sein, dass der erste Werkstücktisch 19 zumindest eine erste Ausnehmung 55 aufweist, durch welche ein Bearbeitungswerkzeug 51 hindurchführbar ist.

Der zweite Werkstücktisch 20 kann mutatis mutandis die oben beschriebene Ausprägung der außermittigen Anordnung der Werkstückaufnahmen bzw. das Vorsehen einer Ausnehmung aufweisen, wobei jedoch der Einfachheit halber auf die detaillierte Beschreibung verzichtet wird.

Natürlich können die obig beschriebenen Ausprägungen auch auf die Ausführung nach Fig. 2 Anwendung finden.

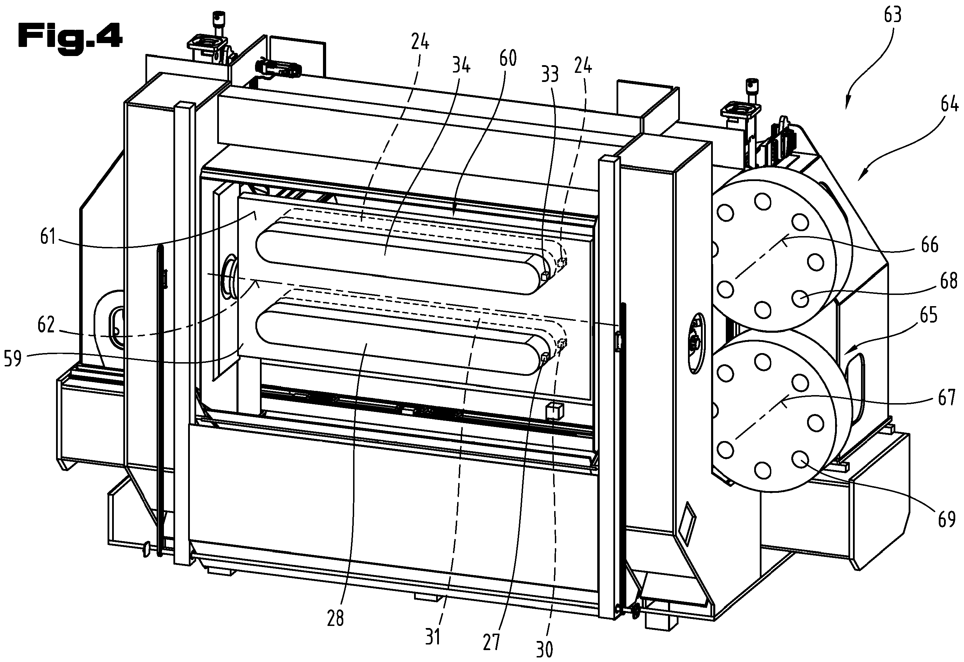

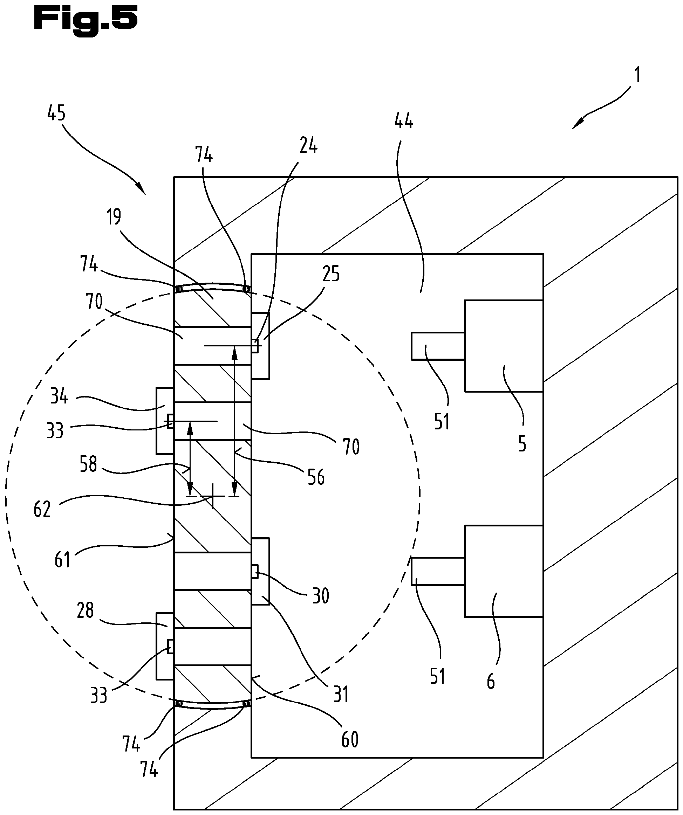

In den Figuren 4 und 5 sind in einer schematischen Darstellung weitere und gegebenenfalls für sich eigenständige Ausführungsformen der Werkzeugmaschine 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in der vorangegangenen Figuren 1 bis 3 hingewiesen bzw. Bezug genommen. Insbesondere wird darauf hingewiesen, dass das Ausführungsbeispiel jener Werkzeugmaschinen 1, welche in den Figuren 4 und 5 dargestellt sind, die gleichen Merkmale oder zumindest teilweise die gleichen Merkmale wie jenes Ausführungsbeispiel der Werkzeugmaschine 1, welche in Fig. 1 dargestellt ist, aufweisen kann. Zum besseren Verständnis wird in der Figur 5 eine stark schematisch vereinfachte Darstellung gewählt.

Fig. 4 zeigt eine schematische Darstellung der Werkzeugmaschine 1 zur spanabhebenden Bearbeitung von Werkstücken 25, 31, 28, 34.

Im Gegensatz zur Ausführung nach Fig. 1 kann in der Ausführung nach Fig. 4 vorgesehen sein, dass ein einzelner Schwenktisch 59 ausgebildet ist. Der Schwenktisch 59 kann an einer Schwenktischvorderseite 60 die erste vordere Werkstückaufnahme 24 zur direkten und unbeweglichen Aufnahme des ersten Werkstückes 25 am Schwenktisch 59 aufweisen. Der Schwenktisch 59 kann ebenfalls an der Schwenktischvorderseite 60 eine zweite vordere Werkstückaufnahme 30 zur direkten und unbeweglichen Aufnahme des zweiten Werkstückes 31 am Schwenktisch 59 aufweisen.

Weiters kann der Schwenktisch 59 an einer Schwenktischrückseite 61 eine erste hintere Werkstückaufnahme 27 zur direkten und unbeweglichen Aufnahme eines ersten hinteren Werkstückes 28 am Schwenktisch 59 aufweisen. Weiters kann der Schwenktisch 59 an der Schwenktischrückseite 61 eine zweite hintere Werkstückaufnahme 33 zur direkten und unbeweglichen Aufnahme eines zweiten hinteren Werkstückes 34 am Schwenktisch 59 aufweisen.

Weiters kann vorgesehen sein, dass der Schwenktisch 59 um eine Schwenktischachse 62, welche parallel zur horizontalen X-Achse (10) ausgerichtet ist, schwenkbar gelagert ist. Je nach Schwenkstellung des Schwenktisches 59 kann die erste vordere Werkstückaufnahme 24 und die zweite vordere Werkstückaufnahme 30 in den Bearbeitungsraum 44 eingeschwenkt sein oder die erste hintere Werkstückaufnahme 27 und die zweite hintere Werkstückaufnahme 33 in den Bearbeitungsraum 44 eingeschwenkt sein.

Eine derartige Ausprägung bringt den Vorteil mit sich, dass sich die Kräfte, welche durch die erste Spindelachse 7 auf den Schwenktisch 59 eingebracht werden und welche durch die zweite Spindelachse 8 auf den Schwenktisch 59 eingebracht werden durch die gegenüberliegende Positionierung hinsichtlich der Schwenktischachse 62 ausgleichen, sodass das Drehmoment des Schwenktisches 59 um die Schwenktischachse 62 bzw. das erforderliche Drehmoment des Antriebsmotors zum Halten des Schwenktisches 59 in Position bei der Bearbeitung möglichst geringgehalten werden kann.

Wie aus Fig. 4 weiters ersichtlich, kann vorgesehen sein, dass die Werkzeugmaschine 1 ein Werkzeugmagazin 63 umfasst. Das Werkzeugmagazin 63 kann einen ersten Werkzeugrevolver 64 und einen zweiten Werkzeugrevolver 65 umfassen.

Insbesondere kann vorgesehen sein, dass seitlich zur Werkstückspannvorrichtung 18 der erste Werkzeugrevolver 64 angeordnet ist, welcher zur Aufnahme von mehreren Bearbeitungswerkzeugen 51 ausgebildet ist. Die erste Arbeitsspindel 5 kann zum ersten Werkzeugrevolver 64 verschiebbar sein, sodass die Bearbeitungswerkzeuge 51 direkt vom ersten Werkzeugrevolver 64 in die erste Arbeitsspindel 5 aufgenommen werden können. Der erste Werkzeugrevolver 64 kann um eine erste Revolverachse 66 drehbar gelagert sein. Insbesondere kann vorgesehen sein, dass der erste Werkzeugrevolver 64 in einem kreisförmigen Muster mehrere erste Werkzeugaufnahmeplätze 68 aufweist.

Weiters kann vorgesehen sein, dass seitlich zur Werkstückspannvorrichtung 18 ein zweiter Werkzeugrevolver 65 angeordnet ist, welcher zur Aufnahme von mehreren Bearbeitungswerkzeugen 51 ausgebildet ist. Die zweite Arbeitsspindel 6 kann zum zweiten Werkzeugrevolver 65 verschiebbar sein, sodass die Bearbeitungswerkzeuge 51 direkt vom zweiten Werkzeugrevolver 65 in die zweite Arbeitsspindel 6 aufnehmbar sind. Der zweite Werkzeugrevolver 65 kann um eine zweite Revolverachse 67 drehbar gelagert sein. Insbesondere kann vorgesehen sein, dass der zweite Werkzeugrevolver 65 in einem kreisförmigen Muster mehrere zweite Werkzeugaufnahmeplätze 69 aufweist.

Natürlich ist es auch denkbar, dass der erste Werkzeugrevolver 64 und der zweite Werkzeugrevolver 65 in gespiegelter Ausführung auch an der zweiten Seite der Werkstückspannvorrichtung 18 angeordnet sind.

Das beschriebene Werkzeugmagazin 63 kann natürlich auch bei allen anderen Ausführungsvarianten der Werkzeugmaschine 1 zum Einsatz kommen.

Wie aus Fig. 5 ersichtlich, kann vorgesehen sein, dass die erste vordere Werkstückaufnahme 24 in einem ersten vorderen Werkstückaufnahmeabstand 56 zur Schwenktischachse 62 angeordnet ist und dass die zweite hintere Werkstückaufnahme 33 in einem zweiten hinteren Werkstückaufnahmeabstand 58 zur Schwenktischachse 62 angeordnet ist. Der erste vordere Werkstückaufnahmeabstand 56 und der zweite hintere Werkstückaufnahmeabstand 58 können unterschiedlich groß sein. Der Schwenktisch 59 kann Ausnehmungen 70 aufweisen, durch welche ein Bearbeitungswerkzeug 51 hindurchführbar ist, um die Rückseite des Werkstückes bearbeiten zu können.

Die Winkelstellung des Schwenktisches 59, wie sie in Fig. 5 dargestellt ist, kann als vertikale Lage bezeichnet werden, wobei ein Winkel 71 der Verschwenkung hierbei 0° beträgt.

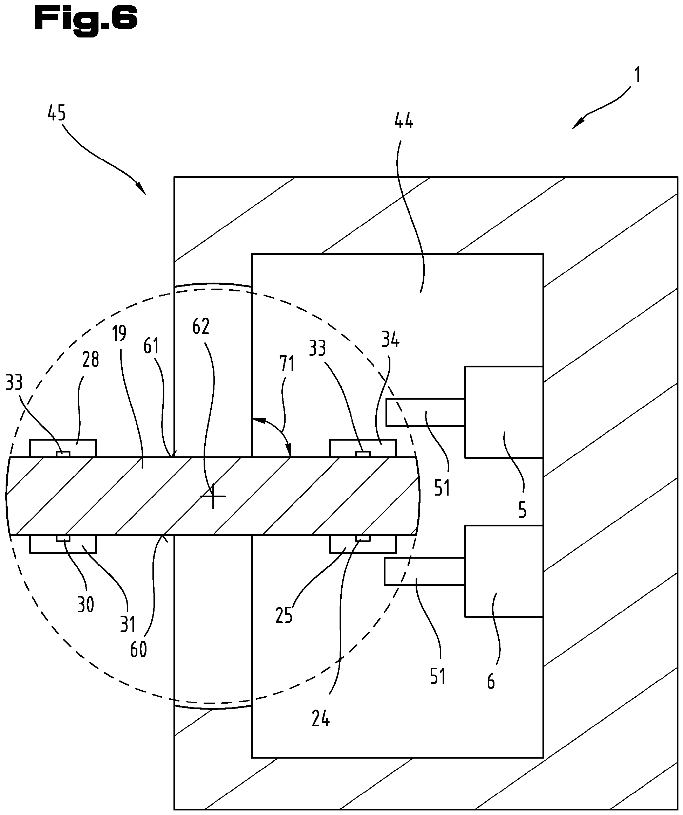

Im Ausführungsbeispiel nach Fig. 6 sind die erste vordere Werkstückaufnahme 24 und die zweite hintere Werkstückaufnahme 33 einander direkt gegenüberliegend am Schwenktisch 59 angeordnet.

Wie aus Fig. 6 ersichtlich, kann vorgesehen sein, dass in einem Arbeitsschritt der Schwenktisch 59 um die Schwenktischachse 62 in einen Winkel 71 von 90° zu einer vertikalen Lage verkippt ist, wobei gleichzeitig das erste Werkstück 25 mittels der zweiten Arbeitsspindel 6 bearbeitet wird und das zweite rückwärtige Werkstück 34 mittels der ersten Arbeitsspindel 5 bearbeitet wird.

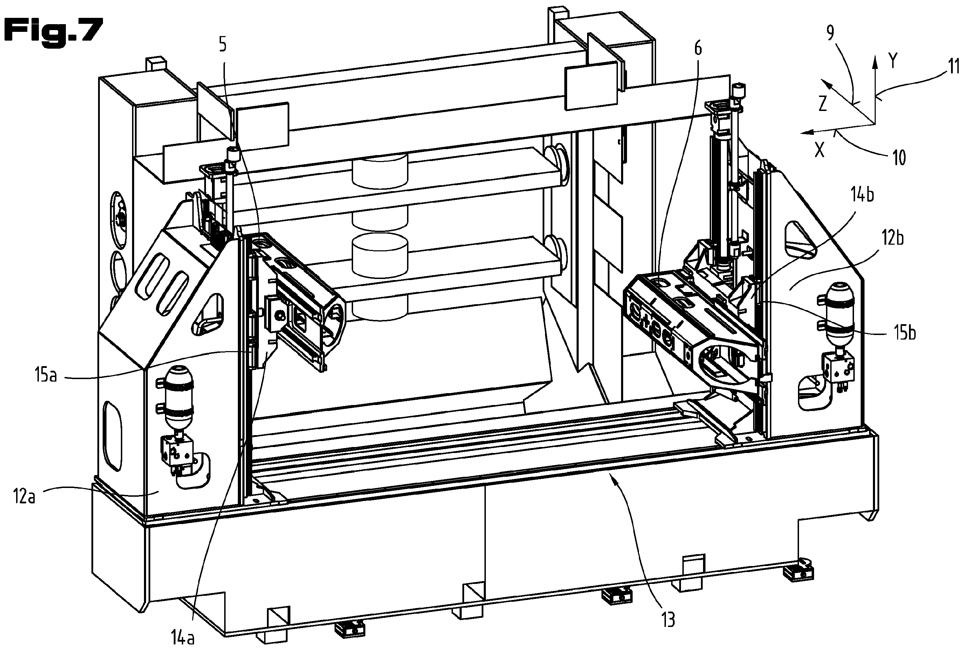

In der Figuren 7 ist in einer schematischen Darstellung eine weitere und gegebenenfalls für sich eigenständige Ausführungsformen der Werkzeugmaschine 1 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in der vorangegangenen Figuren 1 bis 6 hingewiesen bzw. Bezug genommen. Insbesondere wird darauf hingewiesen, dass die Spindelverstellvorrichtung 3 jener Ausführung der Werkzeugmaschine 1, welche in Figur 7 dargestellt ist, auch auf die restlichen der beschriebenen Ausführungsbeispiele Anwendung finden kann. In der Fig. 7 ist die Werkzeugmaschine 1 in einer perspektivischen Ansicht von hinten dargestellt.

Wie aus Fig. 7 ersichtlich, kann vorgesehen sein, dass eine erste Hauptverstelleinheit 12a und eine zweite Hauptverstelleinheit 12b ausgebildet sind, welche jeweils unabhängig voneinander in Richtung der X-Achse 10 relativ bezüglich des Maschinengestells 2 verschiebbar sein können.

Weiters kann vorgesehen sein, dass die erste Arbeitsspindel 5 an einer ersten Höhenverstelleinheit 14a und die zweite Arbeitsspindel 6 an einer zweiten Höhenverstelleinheit 14 angeordnet sind und somit unabhängig voneinander entlang einer Y-Achse 11 verschiebbar sind. Bei dieser Ausführungsvariante kann die erste Höhenverstelleinheit 14 einen ersten Antrieb aufweisen und die zweite Höhenverstelleinheit 14 einen zweiten Antrieb aufweisen. Die erste Höhenverstelleinheit 14a kann mittels einer ersten Y-Achsen-Linearführung 15a an der ersten Hauptverstelleinheit 12a gelagert sein. Die zweite Höhenverstelleinheit 14a kann mittels einer zweiten Y-Achsen-Linearführung 15a an der zweiten Hauptverstelleinheit 12a gelagert sein.

Bei einer derartigen Ausführungsvariante kann vorgesehen sein, dass die Arbeitsspindeln 5, 6 einzeln und unabhängig voneinander in der Z-Achse 9, in der X-Achse 10 und in der Y-Achse 11 relativ zum Maschinengestell 2 verstellbar sind und somit jeweils für jede der Verstellrichtungen einen einzelnen Antrieb aufweisen.

Der Aufbau, wie er in Fig. 7 beschrieben ist, ermöglicht es, dass die erste Arbeitsspindel 5 zur zweiten vorderen Werkstückaufnahme 30 bewegt wird, um das zweite Werkstück 31 zu bearbeiten und dass die zweite Arbeitsspindel 6 zur ersten vordere Werkstückaufnahme 24 bewegt wird um das erste Werkstück 25 zu bearbeiten.

Insbesondere kann vorgesehen sein, dass die erste Höhenverstelleinheit 14a die zweite Höhenverstelleinheit 14 soweit aneineinander geführt werden können, dass die erste Arbeitsspindel 5 exakt oberhalb der zweiten Arbeitsspindel 6 geführt werden kann. Hierbei kann sich die erste Höhenverstelleinheit 14a an der zweiten Höhenverstelleinheit 14 abstützen, um eine erhöhte Stabilität erzielen zu können.

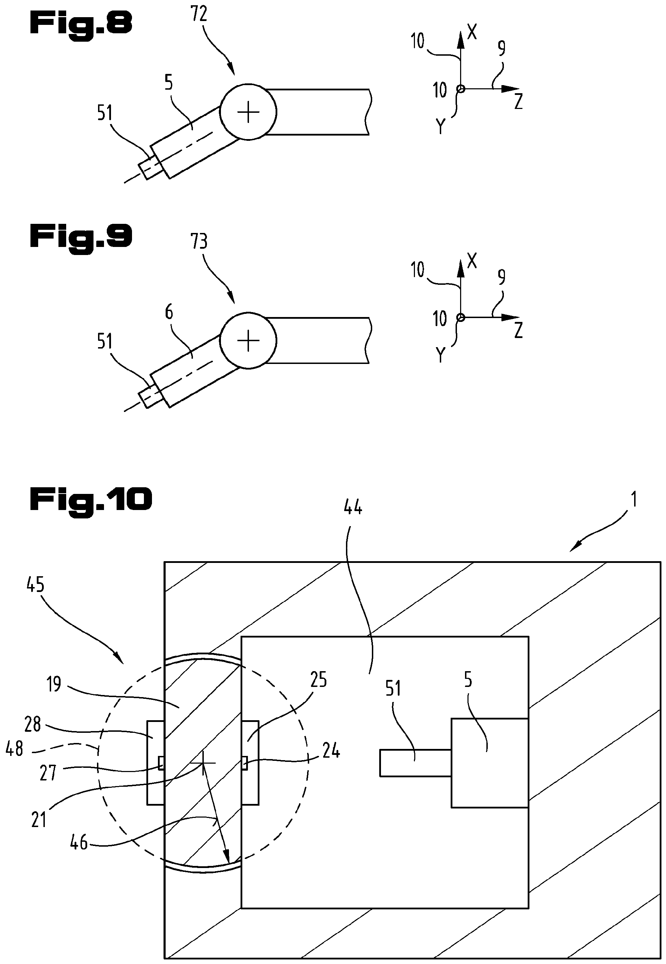

In der Fig. 8 ist ein schematisches Ausführungsbeispiel eines möglichen Aufbaus der ersten Arbeitsspindel 5 in einer Draufsicht dargestellt. Dieser Aufbau kann auf alle anderen Ausführungsbeispiele der Werkzeugmaschine 1 Anwendung finden.

Wie aus Fig. 8 ersichtlich, kann vorgesehen sein, dass ein erster Schwenkkopf 72 ausgebildet ist, mittels welchem die erste Arbeitsspindel 5 um die vertikale Y-Achse 11 schwenkbar ist.

In der Fig. 9 ist ein schematisches Ausführungsbeispiel eines möglichen Aufbaus der zweiten Arbeitsspindel 6 in einer Draufsicht dargestellt. Dieser Aufbau kann auf alle anderen Ausführungsbeispiele der Werkzeugmaschine 1 Anwendung finden.

Wie aus Fig. 9 ersichtlich, kann vorgesehen sein, dass ein zweiter Schwenkkopf 73 ausgebildet ist, mittels welchem die zweite Arbeitsspindel 6 um die vertikale Y-Achse 11 schwenkbar ist.

Wie aus Fig. 10 ersichtlich, kann insbesondere das beschriebene Verfahren zum Betreiben der Werkzeugmaschine 1 auch bei einer Werkzeugmaschine 1 mit einer einzelnen ersten Arbeitsspindel 5 Anwendung finden. Insbesondere kann der Verfahrensschritt eines wechselnden Bearbeiten des ersten Werkstückes 25 und des ersten hinteren Werkstückes 28 mittels desselben in der ersten Arbeitsspindel 5 gespannten Bearbeitungswerkzeuges 51, wobei in einem Pendelbetrieb die erste vordere Werkstückaufnahme 24 der Werkstückspannvorrichtung 18 oder die erste hintere Werkstückaufnahme 27 der Werkstückspannvorrichtung 18 in den Bearbeitungsraum 44 der Werkzeugmaschine 1 eingeschwenkt werden, an einer derartigen Werkzeugmaschine 1 vorteilhaft sein, da die Nebenzeiten durch weniger oft erforderlichen Werkzeugwechsel verkürzt werden können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Werkzeugmaschine | 30 | zweite vordere Werkstückauf-nahme |
| 2 | Maschinengestell | | |
| 3 | gemeinsame Spindelverstellvor-richtung | 31 | zweites Werkstück |
| | | 32 | zweite Werkstücktischrückeite |
| 4 | Arbeitskopf | 33 | zweite hintere Werkstückauf-nahme |
| 5 | erste Arbeitsspindel | | |
| 6 | zweite Arbeitsspindel | 34 | zweites hinteres Werkstück |
| 7 | erste Spindelachse | 35 | erste Schwenklagerung erster Werkstücktisch |
| 8 | zweite Spindelachse | | |
| 9 | Z-Achse | 36 | zweite Schwenklagerung erster Werkstücktisch |
| 10 | X-Achse | | |
| 11 | Y-Achse | 37 | erste Schwenklagerung zweiter Werkstücktisch |
| 12 | Hauptverstelleinheit | | |
| 13 | X-Achsen-Linearführung | 38 | zweite Schwenklagerung zweiter Werkstücktisch |
| 14 | Höhenverstelleinheit | | |
| 15 | Y-Achsen-Linearführung | 39 | Abstand Werkstücktische |
| 16 | erste Z-Achsen-Linearführung | 40 | erste Antriebseinheit |
| 17 | zweite Z-Achsen-Linearführung | 41 | zweite Antriebseinheit |
| 18 | Werkstückspannvorrichtung | 42 | Abstand erste Arbeitsspindel zweite Arbeitsspindel |
| 19 | erster Werkstücktisch | | |
| 20 | zweiter Werkstücktisch | 43 | Digitalrechner |
| 21 | erste Schwenkachse | 44 | Bearbeitungsraum |
| 22 | zweite Schwenkachse | 45 | Beladeraum |
| 23 | erste Werkstücktischvorderseite | 46 | erster Radius |
| 24 | erste vordere Werkstückaufnahme | 47 | zweiter Radius |
| 25 | erstes Werkstück | 48 | erster Flugkreis |
| 26 | erste Werkstücktischrückseite | 49 | zweiter Flugkreis |
| 27 | erste hintere Werkstückaufnahme | 50 | Flugkreisabstand |
| 28 | erstes hinteres Werkstück | 51 | Bearbeitungswerkzeug |
| 29 | zweite Werkstücktischvorderseite | 52 | Trennwandsegment |
| 53 | erste konkave Formgebung | | |
| 54 | zweite konkave Formgebung | | |
| 55 | erste Ausnehmung | | |
| 56 | erster vorderer Werkstückaufnahmeabstand | | |
| 57 | erster hinterer Werkstückaufnahmeabstand | | |
| 58 | zweiter hinterer Werkstückaufnahmeabstand | | |
| 59 | Schwenktisch | | |
| 60 | Schwenktischvorderseite | | |
| 61 | Schwenktischrückseite | | |
| 62 | Schwenktischachse | | |
| 63 | Werkzeugmagazin | | |
| 64 | erster Werkzeugrevolver | | |
| 65 | zweiter Werkzeugrevolver | | |
| 66 | erste Revolverachse | | |
| 67 | zweite Revolverachse | | |
| 68 | erster Werkzeugaufnahmeplatz | | |
| 69 | zweiter Werkzeugaufnahmeplatz | | |
| 70 | Ausnehmung | | |
| 71 | Winkel | | |
| 72 | erster Schwenkkopf | | |
| 73 | zweiter Schwenkkopf | | |
| 74 | erstes Dichtelement | | |
| 75 | zweites Dichtelement | | |

## Patentansprüche

1. Werkzeugmaschine (1) umfassend:
ein Maschinengestell (2) in welchem ein Beladeraum (45) und ein Bearbeitungsraum (44) ausgebildet ist;
eine erste Arbeitsspindel (5), welche um eine erste Spindelachse (7) drehbar gelagert ist, wobei die erste Arbeitsspindel (5) entlang einer horizontalen Z-Achse (9), entlang einer horizontalen X-Achse (10) und entlang einer vertikalen Y-Achse (11) verschiebbar am Maschinengestell (2) aufgenommen ist;
eine Werkstückspannvorrichtung (18), welche zum Aufnehmen zumindest eines ersten Werkstückes (25) und eines zweiten Werkstückes (31) ausgebildet ist,
**dadurch gekennzeichnet, dass** eine zweite Arbeitsspindel (6) ausgebildet ist, welche um eine zweite Spindelachse (8) drehbar gelagert ist, wobei die zweite Arbeitsspindel (6) entlang der Z-Achse (9), entlang der X-Achse (10) und entlang der Y-Achse (11) verschiebbar am Maschinengestell (2) aufgenommen ist, wobei die erste Arbeitsspindel (5) und die zweite Arbeitsspindel (6) vertikal übereinander angeordnet sind und die erste Arbeitsspindel (5) zum Bearbeiten des ersten Werkstückes (25) und die zweite Arbeitsspindel (6) zum Bearbeiten des zweiten Werkstückes (31) ausgebildet ist.

2. Werkzeugmaschine (1) nach Anspruch 1, **dadurch gekennzeichnet, dass** ein Schwenktisch (59) ausgebildet ist, wobei der Schwenktisch (59)
eine erste vordere Werkstückaufnahme (24) zur direkten und unbeweglichen Aufnahme des ersten Werkstückes (25) am Schwenktisch (59) und eine zweite vordere Werkstückaufnahme (30) zur direkten und unbeweglichen Aufnahme des zweiten Werkstückes (31) am Schwenktisch (59) aufweist und
eine erste hintere Werkstückaufnahme (27) zur direkten und unbeweglichen Aufnahme eines ersten hinteren Werkstückes (28) am Schwenktisch (59) und eine zweite hintere Werkstückaufnahme (33) zur direkten und unbeweglichen Aufnahme eines zweiten hinteren Werkstückes (34) am Schwenktisch (59) aufweist,
wobei der Schwenktisch (59) um eine Schwenktischachse (62), welche parallel zu einer horizontalen X-Achse (10) ausgerichtet ist, schwenkbar gelagert ist,
wobei je nach Schwenkstellung des Schwenktisches (59)
die erste vordere Werkstückaufnahme (24) und die zweite vordere Werkstückaufnahme (30) in den Bearbeitungsraum (44) einschwenkbar sind oder
die erste hintere Werkstückaufnahme (27) und die zweite hintere Werkstückaufnahme (33) in den Bearbeitungsraum (44) einschwenkbar sind.

3. Werkzeugmaschine (1) nach Anspruch 2, **dadurch gekennzeichnet, dass** die erste vordere Werkstückaufnahme (24) in einem ersten vorderen Werkstückaufnahmeabstand (56) zur Schwenktischachse (62) angeordnet ist und dass die zweite hintere Werkstückaufnahme (33) in einem zweiten hinteren Werkstückaufnahmeabstand (58) zur Schwenktischachse (62) angeordnet ist, wobei der erste vordere Werkstückaufnahmeabstand (56) und der zweite hintere Werkstückaufnahmeabstand (58) unterschiedlich groß sind und wobei der Schwenktisch (59) Ausnehmungen (70) aufweist, durch welche ein Bearbeitungswerkzeug (51) hindurchführbar ist.

4. Werkzeugmaschine (1) nach Anspruch 1, **dadurch gekennzeichnet, dass** die Werkstückspannvorrichtung (18) einen ersten Werkstücktisch (19) und einen zweiten Werkstücktisch (20) umfasst, wobei der erste Werkstücktisch (19) um eine erste Schwenkachse (21), welche parallel zur X-Achse (10) ausgerichtet ist, schwenkbar gelagert ist und der zweite Werkstücktisch (20) um eine zweite Schwenkachse (22), welche parallel zur X-Achse (10) ausgerichtet ist, schwenkbar gelagert ist und dass die erste Arbeitsspindel (5) dem ersten Werkstücktisch (19) zugeordnet ist und die zweite Arbeitsspindel (6) dem zweiten Werkstücktisch (20) zugeordnet ist, wobei der erste Werkstücktisch (19) eine erste vordere Werkstückaufnahme (24) und eine erste hintere Werkstückaufnahme (27) aufweist und der zweite Werkstücktisch (20) eine zweite vordere Werkstückaufnahme (30) und eine zweite hintere Werkstückaufnahme (33) aufweist, wobei je nach Schwenkstellung des ersten Werkstücktisches (19) und des zweiten Werkstücktisches (20), die erste vordere Werkstückaufnahme (24) und die zweite vordere Werkstückaufnahme (30) in den Bearbeitungsraum (44) einschwenkbar sind oder die erste hintere Werkstückaufnahme (27) und die zweite hintere Werkstückaufnahme (33) in den Bearbeitungsraum (44) einschwenkbar sind.

5. Werkzeugmaschine (1) nach Anspruch 4, **dadurch gekennzeichnet, dass** die erste vordere Werkstückaufnahme (24) in einem ersten vorderen Werkstückaufnahmeabstand (56) zur ersten Schwenkachse (21) angeordnet ist und dass die erste hintere Werkstückaufnahme (27) in einem ersten hinteren Werkstückaufnahmeabstand (57) zur ersten Schwenkachse (21) angeordnet ist, wobei sich der erste vordere Werkstückaufnahmeabstand (56) und der erste hintere Werkstückaufnahmeabstand (57) bezüglich der ersten Schwenkachse (21) in unterschiedliche Seiten des ersten Werkstücktisches (19) erstrecken und wobei der erste Werkstücktisch (19) zumindest eine erste Ausnehmung (55) aufweist, durch welche ein Bearbeitungswerkzeug (51) hindurchführbar ist.

6. Werkzeugmaschine (1) nach Anspruch 4 oder 5, **dadurch gekennzeichnet, dass** der erste Werkstücktisch (19) einen ersten Radius (46) aufweist, welcher an einen ersten Flugkreis (48) des ersten Werkstücktisches (19) angepasst ist und der zweite Werkstücktisch (20) einen zweiten Radius (47) aufweist, welcher an einen zweiten Flugkreis (49) des zweiten Werkstücktisches (20) angepasst ist, wobei der erste Flugkreis (48) des ersten Werkstücktisches (19) und der zweite Flugkreis (49) des zweiten Werkstücktisches (20) in einem Flugkreisabstand (50) zwischen 0,1mm und 10mm, insbesondere zwischen 0,2mm und 5mm, bevorzugt zwischen 0,5mm und 2mm zueinander angeordnet sind.

7. Werkzeugmaschine (1) nach einem der Ansprüche 4 bis 6, **dadurch gekennzeichnet, dass** der erste Werkstücktisch (19), insbesondere am ersten Radius (46), ein erstes Dichtelement (74) aufweist und der zweite Werkstücktisch (20), insbesondere am zweiten Radius (47) ein zweites Dichtelement (75) aufweist.

8. Werkzeugmaschine (1) nach Anspruch 4 oder 5 oder 7, **dadurch gekennzeichnet, dass** der erste Werkstücktisch (19) einen ersten Flugkreis (48) des ersten Werkstücktisches (19) aufweist und der zweite Werkstücktisch (20) einen zweiten Flugkreis (49) des zweiten Werkstücktisches (20) aufweist, wobei der erste Flugkreis (48) des ersten Werkstücktisches (19) und der zweite Flugkreis (49) des zweiten Werkstücktisches (20) in einem Flugkreisabstand (50) zueinander angeordnet sind, wobei zwischen dem ersten Werkstücktisch (19) und dem zweiten Werkstücktisch (20) ein Trennwandsegment (52) angeordnet ist, wobei das Trennwandsegment (52) eine an den ersten Flugkreis (48) und den zweiten Flugkreis (49) angepasste Formgebung aufweist.

9. Werkzeugmaschine (1) nach einem der vorhergehenden Ansprüche, **dadurch gekennzeichnet, dass** seitlich zur Werkstückspannvorrichtung (18) ein erster Werkzeugrevolver (64) angeordnet ist, welcher zur Aufnahme von mehreren Bearbeitungswerkzeugen (51) ausgebildet ist, wobei die erste Arbeitsspindel (5) zum ersten Werkzeugrevolver (64) verschiebbar ist, sodass die Bearbeitungswerkzeuge (51) direkt vom ersten Werkzeugrevolver (64) in die erste Arbeitsspindel (5) aufnehmbar sind und dass
seitlich zur Werkstückspannvorrichtung (18) ein zweiter Werkzeugrevolver (65) angeordnet ist, welcher zur Aufnahme von mehreren Bearbeitungswerkzeugen (51) ausgebildet ist, wobei die zweite Arbeitsspindel (6) zum zweiten Werkzeugrevolver (65) verschiebbar ist, sodass die Bearbeitungswerkzeuge (51) direkt vom zweiten Werkzeugrevolver (65) in die zweite Arbeitsspindel (6) aufnehmbar sind.

10. Werkzeugmaschine (1) nach einem der vorhergehenden Ansprüche, **dadurch gekennzeichnet, dass** die erste Arbeitsspindel (5) und die zweite Arbeitsspindel (6) unabhängig voneinander in der horizontalen Z-Achse (9) und in der vertikalen Y-Achse (11) verschiebbar sind.

11. Werkzeugmaschine (1) nach einem der vorhergehenden Ansprüche, **dadurch gekennzeichnet, dass** ein erster Schwenkkopf (72) ausgebildet ist, mittels welchem die erste Arbeitsspindel (5) um die vertikale Y-Achse (11) schwenkbar ist und dass ein zweiter Schwenckopf (73) ausgebildet ist, mittels welchem die zweite Arbeitsspindel (6) um die vertikale Y-Achse (11) schwenkbar ist.

12. Verfahren zum Betreiben einer Werkzeugmaschine (1), insbesondere einer Werkzeugmaschine (1) nach einem der vorhergehenden Ansprüche, umfassend die Verfahrensschritte:
- Bearbeiten eines ersten Werkstückes (25), welches an einer ersten vorderen Werkstückaufnahme (24) der Werkstückspannvorrichtung (18) gespannt ist und in einen Bearbeitungsraum (44) der Werkzeugmaschine (1) eingeschwenkt ist, mittels eines in der ersten Arbeitsspindel (5) gespannten Bearbeitungswerkzeuges (51) und zeitgleiches Beladen eines ersten hinteren Werkstückes (28) an einer ersten hinteren Werkstückaufnahme (27) der Werkstückspannvorrichtung (18), wobei die erste hintere Werkstückaufnahme (27) in einen Beladeraum (45) der Werkzeugmaschine (1) eingeschwenkt ist;
- wechselndes Bearbeiten des ersten Werkstückes (25) und des ersten hinteren Werkstückes (28) mittels desselben in der ersten Arbeitsspindel (5) gespannten Bearbeitungswerkzeuges (51), wobei in einem Pendelbetrieb die erste vordere Werkstückaufnahme (24) der Werkstückspannvorrichtung (18) oder die erste hintere Werkstückaufnahme (27) der Werkstückspannvorrichtung (18) in den Bearbeitungsraum (44) der Werkzeugmaschine (1) eingeschwenkt werden.

13. Verfahren nach Anspruch 12, **dadurch gekennzeichnet, dass** das Beladen des ersten hinteren Werkstückes (28) an der ersten hinteren Werkstückaufnahme (27) der Werkstückspannvorrichtung (18) in einem Zeitfenster erfolgt, in welchem das Bearbeiten des ersten Werkstückes (25) kein Schwenken der ersten vorderen Werkstückaufnahme (24) erfordert, wobei außerhalb dieses Zeitfensters während der Bearbeitung des ersten Werkstückes (25) der erste Werkstücktisch (19) um eine erste Schwenkachse (21) beziehungsweise der Schwenktisch (59) um die Schwenktischachse (62) geschwenkt wird.

14. Verfahren nach Anspruch 12, **dadurch gekennzeichnet, dass** das Beladen des ersten hinteren Werkstückes (28) an der ersten hinteren Werkstückaufnahme (27) der Werkstückspannvorrichtung (18) in einem Zeitfenster erfolgt, in welchem der erste Werkstücktisch (19) um eine erste Schwenkachse (21) beziehungsweise der Schwenktisch (59) um die Schwenktischachse (62) geschwenkt wird, wobei eine Bewegung einer Vorrichtung zum Beladen des ersten hinteren Werkstückes (28) mit der Bewegung der ersten hinteren Werkstückaufnahme (27) synchronisiert ist.

15. Verfahren nach Anspruch 12, **dadurch gekennzeichnet, dass** mittels eines Digitalrechners (43) der Programmablauf zum Bearbeiten des ersten Werkstückes (25) und des ersten hinteren Werkstückes (28) analysiert wird, wobei das Zeitfenster zum Beladen des ersten hinteren Werkstückes (28) mittels des Digitalrechners (43) automatisiert festgelegt wird.

16. Verfahren nach einem der Ansprüche 11 bis 13, **dadurch gekennzeichnet, dass** in einem Arbeitsschritt der Schwenktisch (59),
mit der ersten vordere Werkstückaufnahme (24) und dem daran aufgenommenen ersten Werkstück (25) und der zweiten vorderen Werkstückaufnahme (30) und dem daran aufgenommenen zweiten Werkstück (31)
sowie mit der ersten hinteren Werkstückaufnahme (27) und dem dran aufgenommenen ersten hinteren Werkstück (28) und der zweiten hinteren Werkstückaufnahme (33) und dem dran aufgenommenen zweites hinteres Werkstück (34),
um die Schwenktischachse (62) in einen Winkel (71) zwischen 45° und 135° zu einer vertikalen Lage verkippt ist, wobei gleichzeitig das erste Werkstück (25) mittels der zweiten Arbeitsspindel (6) bearbeitet wird und das zweite rückwärtige Werkstück (34) mittels der ersten Arbeitsspindel (5) bearbeitet wird.

17. Verfahren nach einem der Ansprüche 11 bis 14, **dadurch gekennzeichnet, dass** in einem Arbeitsschritt der Schwenktisch (59),
mit der ersten vordere Werkstückaufnahme und dem daran aufgenommenen ersten Werkstück (25) und der zweiten vorderen Werkstückaufnahme und dem daran aufgenommenen zweiten Werkstück (31)
um die Schwenktischachse (62) in einen Winkel (71) zwischen 0,5° und 70° zu einer vertikalen Lage verkippt ist, wobei gleichzeitig das erste Werkstück (25) mittels der ersten Arbeitsspindel (5) und das zweite Werkstück (31) mittels der zweiten Arbeitsspindel (6) bearbeitet wird, wobei die erste Arbeitsspindel (5) und die zweite Arbeitsspindel (6) in unterschiedlichen Positionen entlang der horizontalen Z-Achse (9) positioniert sind, sodass die Verschwenkung des Schwenktisches (59) ausgeglichen wird.

18. Verfahren nach einem der Ansprüche 11 bis 15, **dadurch gekennzeichnet, dass** das an der ersten vorderen Werkstückaufnahme (24) aufgenommene erste Werkstück (25) und das an der zweiten vorderen Werkstückaufnahme (30) aufgenommene zweite Werkstück (31) spiegelgleich ausgebildet sind, wobei eine Verstellung der ersten Arbeitsspindel (5) und der zweiten Arbeitsspindel (6) in der vertikalen Y-Achse (11) spiegelgleich erfolgt.

19. Verfahren nach einem der Ansprüche 11 bis 16, **dadurch gekennzeichnet, dass** während des Bearbeitens des ersten Werkstückes (25) die erste Arbeitsspindel (5) mittels eines ersten Schwenkkopfes (72) um die vertikale Y-Achse (11) geschwenkt wird.

20. Verfahren nach einem der Ansprüche 11 bis 17, **dadurch gekennzeichnet, dass** in der ersten Arbeitsspindel (5) und in der zweiten Arbeitsspindel (6) zwei unterschiedliche Bearbeitungswerkzeuge (51) gespannt sind, wobei mittels des in der ersten Arbeitsspindel (5) gespannten Bearbeitungswerkzeuges (51) sowohl das erste Werkstück (25) als auch das zweite Werkstück (31) bearbeitet wird und mittels des in der zweiten Arbeitsspindel (6) gespannten Bearbeitungswerkzeuges (51) sowohl das erste Werkstück (25) als auch das zweite Werkstück (31) bearbeitet wird.
